# EUROPÄISCHE PATENTSCHRIFT

(11) **EP 1 536 905 B1**
(45) Veröffentlichungstag und Bekanntmachung des Hinweises auf die Patenterteilung: **09.12.2009**
(21) Anmeldenummer: 03794937.7
(22) Anmeldetag: 26.08.2003
(51) Int. Cl.: B23B 51/04, B23B 27/14

(54) **BOHRWERKZEUG MIT WECHSELSCHNEIDPLATTEN SOWIE WECHSELSCHNEIDPLATTEN FÜR EIN SOLCHES BOHRWERKZEUG**
DRILLING TOOL WITH ALTERNATING CUTTING PLATES AND ALTERNATING CUTTING PLATES FOR SAID DRILLING TOOL
OUTIL A PERCER PRESENTANT DES MATRICES DE DECOUPAGE ALTERNATIF, ET MATRICES DE DECOUPAGE ALTERNATIF DESTINEES A UN OUTIL A PERCER DE CE TYPE

(30) Priorität: 09.09.2002 DE 10241841; 13.05.2003 DE 10321635
(43) Veröffentlichungstag der Anmeldung: 08.06.2005
(73) Patentinhaber: Komet Group GmbH, 74354 Besigheim (DE)
(72) Erfinder: KRUSZYNSKI, Jacek, 70190 Stuttgart (DE); MORLOK, Helmut, 74369 Löchgau (DE); SCHÜTT, Henry, 74343 Sachsenheim (DE); LEUZE, Peter, 74399 Walheim (DE)
(74) Vertreter: Wolf, Eckhard
(86) Internationale Anmeldenummer: PCT/EP2003/009426
(87) Internationale Veröffentlichungsnummer: WO 2004/024381

(56) Entgegenhaltungen:
- EP-A- 0 240 759
- EP-A- 0 491 670
- WO-A-01/85375
- DE-A- 10 030 297
- GB-A- 2 016 316
- US-A- 5 695 303
- US-A- 5 800 100

## Beschreibung

Die Erfindung betrifft ein Bohrwerkzeug mit einem um eine Bohrerachse drehbaren Grundkörper, mit zwei im Spitzenbereich des Grundkörpers angeordneten Plattensitzen und mit in den Plattensitzen auswechselbar eingesetzen, an einer zentralen Plattenecke über die Bohrerachse hinweg unter Freilassung einer Zentrumslücke einander zugewandten Wechselschneidplatten, die eine von einer radial äußeren Führungsfase bis zur zentralen Plattenecke reichende Hauptschneide, und je eine sich im Bereich der Hauptschneide unter Bildung eines Schneidkeils treffende Spanfläche und Freifläche aufweisen, wobei die Hauptschneiden der Wechselschneidplatten sich im Bereich einer zentralen, vorzugsweise abgewinkelten Schneidenpartie zu einer durch die Zentrumslücke unterbrochenen Querschneide ergänzen. Weiter betrifft die Erfindung eine Wechselschneidplatte für den Einsatz in ein Bohrwerkzeug der genannten Art. EP0 240 759 zeigt gattungs-bildende Bohrwerkzeuge bzw. Wechselschneidplatten.

Bohrwerkzeuge dieser Art werden als doppelschneidige Vollbohrer verwendet, die ähnlich aufgebaut sind, wie ein Spiralbohrer, jedoch mit wechselbaren Schneidplatten. Die stirnseitig in die Bohrerspitze eingeschraubten Wechselschneidplatten weisen im Bereich ihrer Hauptschneiden einen Spitzenwinkel auf, der dafür sorgt, dass der Bohrer in der Bohrung zentriert wird (DE-A 100 30 297). Da die Schneidplatten nicht über die Bohrerachse hinweg schneiden, sondern in diesem Bereich unter Freilassung der Zentrumslücke einen Abstand voneinander aufweisen, bleibt dort beim Bohrvorgang ein kleiner Butzen oder Zapfen stehen, der nicht zerspant wird. Der Abstand im Bereich der Zentrumslücke wird dabei so eingestellt, dass der entstehende Zapfen klein genug ist, damit er beim Bohrvorgang zerbröselt wird. Um die beim Bohrvorgang auftretenden Druckkräfte zerstörungsfrei aufnehmen zu können, ist die zentrale Schneidenpartie im Verlauf der Schneide abgerundet oder facettiert. Beim Betrieb derartiger Bohrwerkzeuge hat es sich jedoch gezeigt, dass die auf diese Weise gebildete Schutzfase nicht ausreicht, um die Bruchgefahr der Wechselschneidplatte an dieser Stelle auszuschließen. Außerdem lässt die Führung des bekannten Bohrers beim Bohrvorgang zu wünschen übrig.

Ausgehend hiervon liegt der Erfindung die Aufgabe zugrunde, das bekannte Bohrwerkzeug und die Wechsetschneidplatten der eingangs angegebenen Art dahingehend zu verbessern, dass die Bruchgefahr im zentralen Bereich der Wechselschneidplatten verringert wird und eine bessere Führung des Werkzeugs gewährleistet ist.

Zur Lösung dieser Aufgabe werden die in den Ansprüchen 1, 2, 37 und 45 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung besteht im wesentlichen, darin, dass die Wechselschneidplatten an ihrer Freifläche eine von einer von einer Position innerhalb ihrer zentralen Schneidenpartie ausgehenden Scheitellinie bis zur zentralen Plattenecke verlaufende geneigte Leitschräge aufweisen, und dass die Freiflächen im radial äußeren Bereich in Vorschubrichtung positiv, sich pfeilartig ergänzend und im Bereich ihrer Leitschrägen in Vorschubrichtung negativ, sich zur Zentrumslücke hin trichterartig ergänzend geneigt sind. Die Zentrumsschrägen an den Schneidplatten sorgen dafür, dass die Bohrerspitze die Gestalt eines in Vorschubrichtung umgekehrten W erhält mit dem Effekt, dass die Spanklemmung im Bereich der Zentrumsschrägen reduziert wird und die beim Spanabriss auftretenden Druckkräfte sich über eine größere Fläche im Zentrumsbereich verteilen. Dadurch wird die Bruchgefahr im zentralen Plattenbereich wirksam vermieden.

Die nachstehenden Ausführungen beziehen sich überwiegend auf den Fall der stehenden Wechselschneidplatten, deren Durchtrittsöffnung die Freifläche und die der Freifläche abgewandte Auflagefläche durchdringt. Grundsätzlich ist das Prinzip der Erfindung auch auf Bohrwerkzeuge mit liegenden Wechselschneidplatten übertragbar, bei welchen nicht die Freifläche, sondern die Spanfläche und die der Spanfläche abgewandte Auflagefläche von der Durchtrittsöffnung für ein Befestigungsorgan durchdrungen sind. In diesem Fall sind die Plattensitze im Spitzenbereich des Grundkörpers liegend angeordnet.

Der Zentrumsschräge kommt eine Führungsfunktion für den im Zentrumsbereich entstehenden Restspan in Richtung Zentrumslücke zu. Eine Freisparung im Bereich der zentralen Plattenecke sowie eine gegenüber den Plattensitzen axial zurückversetzte konkave Kontur im Grundkörper ergeben außerdem eine verbesserte Spanabfuhr. Die konkave Kontur im Grundkörper sorgt ferner dafür, dass die Kerbwirkung der beim Bohrvorgang im Bereich der Bohrerseele angreifenden Spreizkräfte reduziert wird.

Vorteilhafterweise schließen die zur zentralen und zur radial äußeren Schneidenpartie der Hauptschneide gehörenden Spanflächenabschnitte im Übergangsbereich einen Querschneidenwinkel kleiner 70°, vorzugsweise 20° bis 40° miteinander ein. Bei exakt symmetrischer Anordnung der Wechselschneidplatten am Grundkörper ergibt sich eine symmetrische Betriebsweise mit ausgeglichenen Radialkräften. Dadurch ist der Bohrer in seiner Lage bezüglich der beiden Schneidplatten beim Bohrvorgang unbestimmt. Geringe Radialkraft-Unterschiede beim Schneidvorgang reichen aus, um den Bohrer in die eine oder andere Richtung abzudrängen. Diese Unbestimmtheit führt dazu, dass Toleranzen entstehen, die auf das zufällige Abdrängen in die eine oder andere radiale Richtung zurückzuführen sind. Deshalb ist bei einer solchen Konfiguration die Zylindrizität der Bohrung nicht immer gewährleistet.

Genauere Bohrungen können erzielt werden, wenn durch Einbringung einer gewissen Unsymmetrie in der Plattenanordnung eine Bearbeitungsdominanz an einer der beiden Wechselschneidplatten erzeugt wird. Dies kann beispielsweise dadurch erreicht werden, dass die einander entsprechenden Abschnitte der Hauptschneiden der beiden Wechselschneidplatten einen Winkel ungleich 180° miteinander einschließen. Es hat sich gezeigt, dass eine geringe Abweichung, beispielsweise zwischen 0° und 4° zu einer ausreichenden Vorzugsrichtung führt, ohne dass es dabei zu einer übermäßigen Ungleichheit im Verschleiß kommt. Es reicht völlig aus, wenn der Winkelversatz etwas größer als die sich auf die Abdrängwirkung auswirkenden Toleranzen gewählt wird. Die mit ihrer Schneide voreilende Platte übernimmt dabei die dominante Führungsfunktion, während die nacheilende Platte nachgeführt wird. Die Plattendominanz kann auch dadurch beeinflusst werden, dass die Wechselschneidplatten in axialer Richtung einen Versatz aufweisen. Die axial führende Platte erzeugt einen etwas dickeren Span. Der optimale Axialversatz liegt dementsprechend in der Größenordnung 1/100 mm, vorzugsweise 0,005 mm bis 0,05 mm. Wenn die Dominanz zwischen den Platten richtig eingestellt ist, erhält man eine eindeutige radiale Führung an der Bohrungswand über die radial außen liegende Führungsfase der nicht dominanten Platte.

Eine weitere bevorzugte Ausgestaltung der Erfindung sieht vor, dass die die Durchtrittsöffnung enthaltende radial äußere Freiflächenpartie und die zentrale Leitschräge im Bereich der Scheitellinie einen Scheitelwinkel kleiner 170°, vorzugsweise 120° bis 160° einschließen.

Gemäß der Erfindung geht die Scheitellinie von einer Position innerhalb der zentralen Schneidenpartie aus und verläuft zu einer gegenüberliegenden Plattenkante, wobei sich die zentrale Schneidenpartie und die gegenüberliegende Plattenkante in der zentralen Plattenecke treffen. Daraus folgt, dass die zentrale Leitfläche einen durch die Scheitellinie, einen Abschnitt der zentralen Schneidenpartie und einen Abschnitt der benachbarten Plattenkante begrenzten dreieckigen Umriss aufweist. Vorteilhafterweise beträgt hierbei die zwischen der Scheitellinie und der Plattenecke gemessene Höhe der im Umriss dreieckigen zentralen Leitfläche ein Vielfaches, vorzugsweise das 5- bis 20-fache der Weite der Zentrumslücke, wobei die Weite der Zentrumslücke sich nach der Zähigkeit des zu verarbeitenden Werkstückmaterials richtet und zweckmäßig kleiner als 0,3 mm ist.

Um beim Bohrvorgang die Kühlung im Bereich der Wechselschneidplatten und die Spanabfuhr zu verbessern, wird gemäß einer alternativen oder bevorzugten Ausgestaltung der Erfindung vorgeschlagen, dass die Wechselschneidplatten mit ihren der Spanfläche abgewandten Anlageflächen und mit ihrer Auflagefläche gegen komplementäre Sitzflächen des Plattensitzes anliegen, dass die Anlageflächen über je eine mit den Sitzflächen des Plattensitzes einen kanalartigen Freiraum bildende Auflagefase in die Auflagefläche übergehen und dass in jeden Plattensitz im Bereich des kanalartigen Freiraums je ein im Grundkörper angeordneter, mit einem Kühlschmiermittel beaufschlagbarer Kühlkanal mündet. Der kanalartige Freiraum ist dabei zweckmäßig sowohl nach innen zur Zentrumslücke als auch nach außen zur radial äußeren Führungsfase hin offen. Der durch die Kühlkanäle geleitete Kühlschmierstoff trägt an der außenseitigen Führungsfase zur Kühlung und Schmierung bei, während er nach innen zur Zentrumslücke hin für den Abtransport der dort auftretenden Krümelspäne in die Spankanäle sorgt.

Vorteilhafterweise gehen die von der Spanfläche abgewandten Anlageflächen der Wechselschneidplatten und deren Auflagefasen über eine gerundete Plattenecke ineinander über, wobei der Kühlkanal vorteilhafterweise in der Nähe der abgerundeten Plattenecke in den Plattensitz mündet.

Um die beim Bohrvorgang auftretenden Radialkräfte nicht allein von den Befestigungsschrauben aufnehmen zu müssen, wird gemäß einer weiteren vorteilhaften Ausgestaltung der Erfindung vorgeschlagen, dass die Plattensitze und die Wechselschneidplatten komplementär ineinander greifende Verzahnungen zur Erzeugung eines radialen Formschlusses aufweisen.

Zur weiteren Verbesserung der Schneideigenschaften des Bohrwerkzeugs wird gemäß einer bevorzugten Ausgestaltung der Erfindung vorgeschlagen, dass die Wechselschneidplatte im Bereich der Spanfläche eine zumindest an einem Teil der Hauptschneide angrenzende Spanformmulde aufweist. Die Spanformmulde kann zumindest partiell in den Bereich der zentralen Schneidpartie, gegebenenfalls sogar über die Scheitellinie hinweg in den Bereich der an die Leitschräge angrenzenden Spannfläche in die Nähe der zentralen Plattenecke hineinreichen. Außerdem kann die Spanformmulde bis in die Nähe der Nebenschneide heranreichen, und diese eventuell sogar durchdringen. Die Spanformmulde weist zweckmäßig eine konkave, vorzugsweise eine teilzylindrische Bodenfläche auf. Vorteilhafterweise sind die Hauptschneide und die Spanformmulde durch eine vorzugsweise parallel zur Hauptschneide verlaufende Fase voneinander getrennt. Die beschriebene Spanformmulde soll vor allem dafür sorgen, dass der beim Bohrvorgang entstehende Span so geformt wird, dass er vom Zentrum weggezogen wird.

Eine weitere Verbesserung in dieser Hinsicht kann dadurch erzielt werden, dass die Hauptschneide durch im Abstand voneinander angeordnete Spanbrecherkerben unterbrochen ist. Die Spanbrecherkerben sind zweckmäßig außerhalb der zentralen Schneidenpartie angeordnet. Grundsätzlich können jedoch auch im Bereich der zentralen Schneidenpartie Spanbrecherkerben vorgesehen werden.

Die Nebenschneide ist gemäß einer vorteilhaften Ausgestaltung der Erfindung in ihrem Verlauf parallel zur Bohrerachse oder um einen Winkel bis zu 30° divergierend gegenüber der Vorschubrichtung ausgerichtet.

Im Folgenden wird die Erfindung anhand eines in der Zeichnung schematisch dargestellten Ausführungsbeispiels näher erläutert. Es zeigen
- Fig. 1: eine schaubildliche Darstellung eines Bohrwerkzeugs mit stehen-den Wechselschneidplatten;
- Fig. 2: einen vergrößerten Ausschnitt aus Fig. 1;
- Fig. 3a: eine Stirnseitenansicht des Bohrwerkzeugs nach Fig. 1;
- Fig. 3b: einen vergrößerten Ausschnitt aus Fig. 3a;
- Fig. 4a und b: zwei vergrößerte Ausschnitte des Bohrwerkzeugs in je einer Seitenansicht;
- Fig. 5a bis c: eine Wechselschneidplatte für das Bohrwerkzeug in drei verschiedenen schaubildlichen Darstellungen;
- Fig. 6: eine schaubildliche Darstellung eines Bohrwerkzeugs mit liegenden Wechselschneidplatten;
- Fig. 7a und b: zwei vergrößerte Ausschnitte aus dem Spitzenbereich des Bohrwerkzeugs nach Fig. 6;
- Fig. 8: eine Stirnseitenansicht des Bohrwerkzeugs nach Fig. 6;
- Fig. 9: eine Seitenansicht der Wechselschneidplatte für das Bohrwerkzeug nach Fig. 6;
- Fig. 10a bis d: je eine Wechselschneidplatte für das Werkzeug mit unterschiedlich ausgestalteten Spanformmulden im Bereich der Spanflächen in schaubildlichen Darstellungen;
- Fig. 11 a und b: zwei Ausführungsbeispiele einer Wechselschneidplatte für das Bohrwerkzeug mit verschieden gestalteten Spanbrecherkerben im Bereich der Hauptschneide jeweils in schaubildlicher Darstellung.

Die in der Zeichnung dargestellten Bohrwerkzeuge sind als zweischneidige Vollbohrer ausgebildet. Die Bohrwerkzeuge sind für den Einsatz in Werkzeugmaschinen bestimmt und weisen zu diesem Zweck einen von einem Kupplungsflansch 10 für eine Planflächenanlage begrenzten Kupplungsschaft 12 für den Anschluss an eine nicht dargestellte Maschinenspindel auf. Mit dem Kupplungsflansch 10 ist außerdem ein langgestreckter Grundkörper 14 verbunden, der stirnseitig mit zwei Plattensitzen 16 versehen ist, von denen aus sich Spanfördernuten 18 über die Länge des Grundkörpers 14 erstrecken. In den Plattensitzen 16 sind zwei gleich ausgebildete Wechselschneidplatten 20 angeordnet und mit Befestigungsschrauben 22 am Grundkörper 14 befestigt.

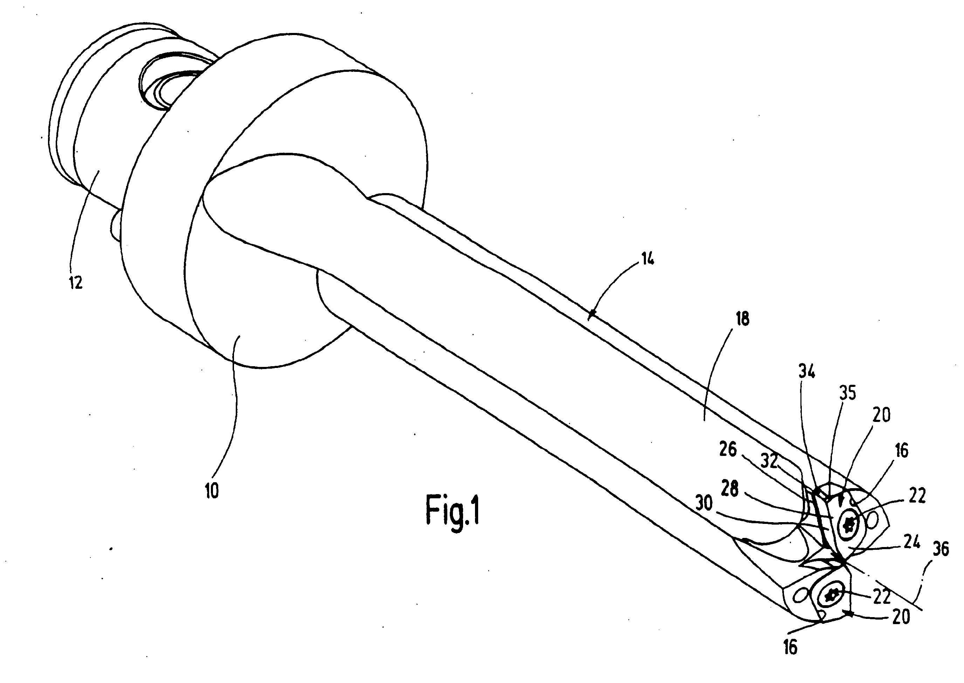

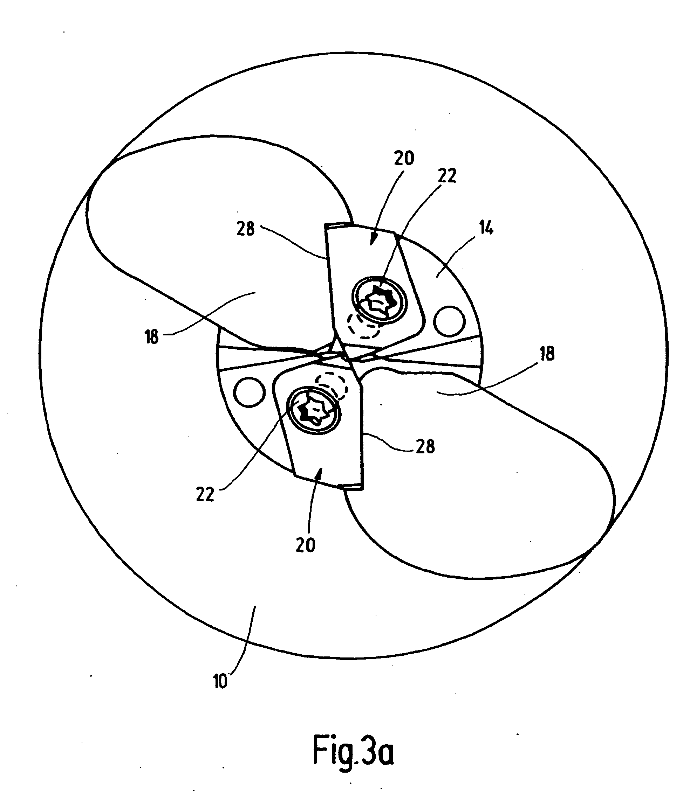

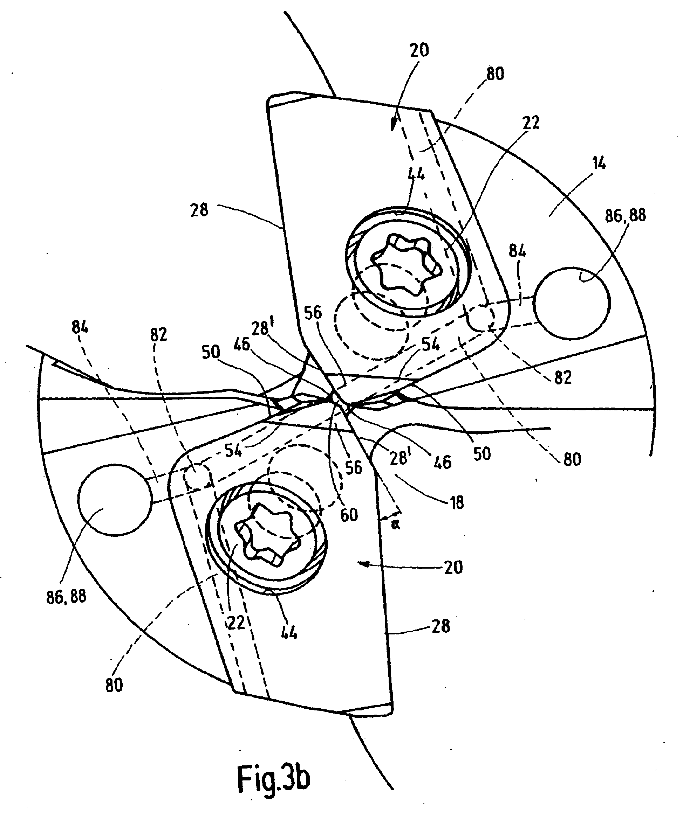

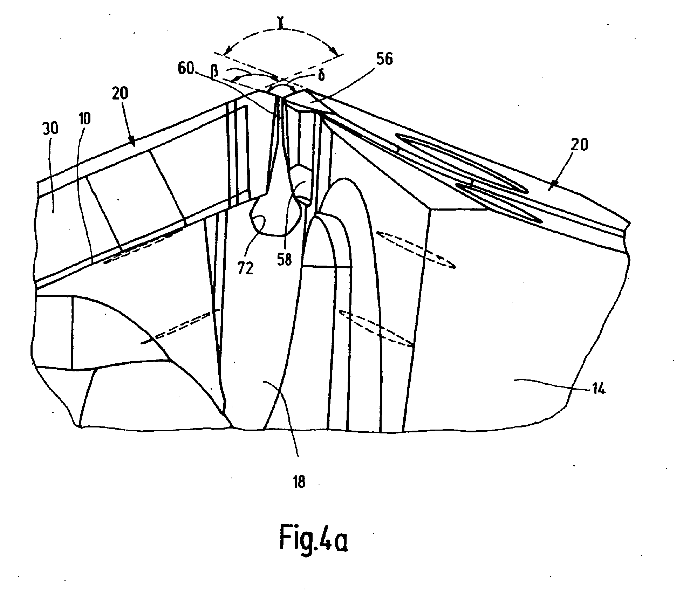

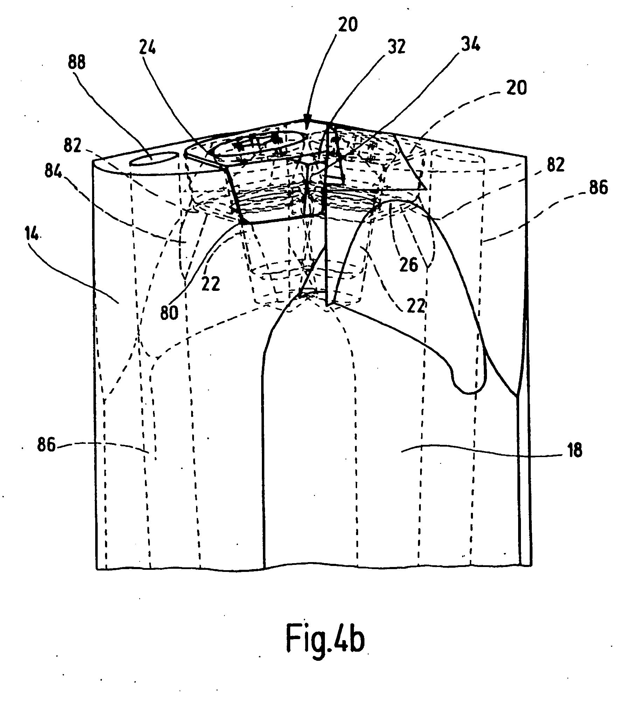

Die stehend angeordneten Schneidplatten 20 nach Fig. 1 bis 5 weisen eine Freifläche 24 und eine von dieser abgewandte Auflagefläche 26 auf, die planparallel zueinander ausgerichtet sind. Auf der Seite der Spanfördernut wird die Freifläche 24 durch die Hauptschneide 28 und die daran anschließende, in die Spanfördernut 18 mündende Spanfläche 30 begrenzt. Radial nach außen hin schließen sich an die Hauptschneide 28 und die Spanfläche 30 eine zugleich als Führungskante ausgebildete Nebenschneide 32 und eine Führungsfase 34 an. Die Nebenschneide 32 und die Führungsfase 34 erstrecken sich im Anschluss an eine Schneidfase 35 über die Plattendicke hinweg parallel zur Bohrerachse 36. Die Führungsfasen 34 der beiden Schneidplatten 20 unterstützen die Führung des Bohrwerkzeugs im Bohrloch, während der Spitzenwinkel zwischen den Hauptschneiden 28 der beiden Schneidplatten 20, der vor allem in Fig. 4 erkennbar ist, eine Zentrierung des Bohrers im Bohrloch gewährleistet. Die Befestigungsöffnung 44 für den Durchgriff der Befestigungsschrauben 22 greift quer zwischen Freifläche 24 und Auflagefläche 26 durch die Wechselschneidplatten hindurch. Wie vor allem aus Fig. 3b zu ersehen ist, weisen die Hauptschneiden 28 der Wechselschneidplatten 20 eine um einen Querschneidenwinkel α von etwa 30° abgewinkelte zentrale Schneidenpartie 28' auf, die sich bis zur zentralen Plattenecke 46 erstreckt, von der aus sich eine in eine die Anlagefläche 48 begrenzende Anlagekante 50 übergehende Zentrumsfase 52 befindet. Die Freifläche 24 weist eine von einer im Bereich zwischen Durchtrittsöffnung 44 und innerer Plattenecke 46 angeordneten Scheitellinie 54 bis zur inneren Plattenecke 46 verlaufende, in Richtung Auflagefläche 26 geneigte Leitschräge 56 auf. Der Scheitelwinkel β zwischen der radial äußeren, die Durchtrittsöffnung 44 enthaltenden Freiflächenpartie 24 und der Leitschräge 56 beträgt bei dem gezeigten Ausführungsbeispiel etwa 140°. Die Scheitellinie 54 geht dabei von einer Position innerhalb der zentralen Schneidenpartie 28' aus und reicht bis zur gegenüberliegenden Plattenkante 50. Wie aus Fig. 3b zu ersehen ist, weist die zentrale Leitschräge eine durch die Scheitellinie 54, einen Abschnitt der zentralen Schneidenpartie 28' und einen Abschnitt der Plattenkante 50 begrenzten dreieckigen Umriss auf. Weiter ist im Bereich der zentralen Plattenecke auf der Seite der Auflagefläche 26 eine zum Grundkörper 14 hin randoffene Freisparung 58 angeordnet.

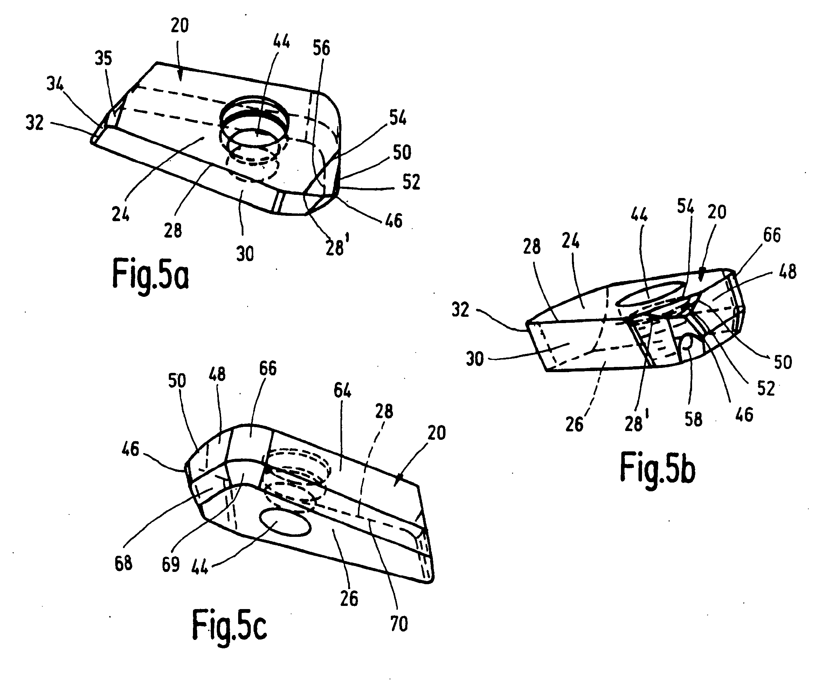

Im montierten Zustand weisen die Wechselschneidplatten 20 im Bereich ihrer Plattenecken 46 unter Bildung der Zentrumslücke 60 einen kleinen Abstand von 0,05 bis 0,2 mm auf. Die zentralen Schneidenpartien 28' der beiden Wechselschneidplatten sind dabei so einander zugeordnet, dass sie sich zu einer durch die Zentrumslücke 60 unterbrochenen Querschneide ergänzen. Wie insbesondere aus Fig. 4a zu ersehen ist, schließen die Freiflächen 24 in ihrem radial äußeren Bereich in Vorschubrichtung einen positiven Spitzenwinkel γ ein, der dafür sorgt, dass der Bohrer beim Bohrvorgang am Bohrungsgrund zentriert wird. Im Bereich der Leitschrägen 56 dagegen sind die zentralen Schneidenpartien 28' der beiden Schneidplatten in Vorschubrichtung negativ, sich zur Zentrumslücke 60 hin trichterartig ergänzend geneigt und bilden einen Trichterwinkel δ. Auch dieser Winkel trägt zur Zentrierung am Bohrungsgrund bei und sorgt dafür, dass die im am Bohrungsgrund bei und sorgt dafür, dass die im Zentrum bei der Spanerzeugung entstehenden Druckkräfte über eine größere Fläche verteilt und dadurch reduziert werden. In den Fig. 5b und c ist erkennbar, dass die von der Spanfläche 30 abgewandten Anlageflächen 48, 64 über eine gerundete Plattenecke 66 ineinander und über Auflagefasen 68, 69, 70 in die Auflagefläche 26 übergehen. Die Auflagefasen 68, 69, 70 bilden zusammen mit den benachbarten Sitzflächen des Plattensitzes 16 einen kanalartigen Freiraum 80, der sowohl radial nach innen zur Zentrumslücke 60 hin als auch nach außen zur äußeren Führungsfase 34 hin offen ist (Fig. 3b und 4b). Der kanalartige Freiraum 80 eines jeden Plattensitzes 16 kommuniziert über je eine Mündungsöffnung 82 und einen Stichkanal 84 mit einem im Grundkörper angeordneten Kühlkanal 86, der eine zweite stirnseitig am Grundkörper angeordnete Austrittsöffnung 88 aufweist und der im rückwärtigen Bereich des Bohrwerkzeugs mit einem Kühlschmiermittel unter Druck beaufschlagbar ist. Das über die Mündungsöffnung 82 in den kanalartigen Freiraum 80 gelangende Kühlschmiermittel trägt auf der Außenseite zur Führungsfase 34 hin zur Kühlung und Schmierung beim Bohrvorgang bei, während es nach innen zur Zentrumslücke 60 hin für den Abtransport der dort entstehenden Krümelspäne in die Spankanäle 18 sorgt.

Die im montierten Zustand im Wesentlichen radial ausgerichtete Anlagefläche 64 kann grundsätzlich auch stufenförmig ausgebildet werden, so dass sich ein radialer Formschluss mit einem an der betreffenden Stelle entsprechend stufenförmig ausgebildeten Plattensitz ergibt. Damit kann die Befestigungsschraube 22 von Radialkräften, die beim Bohrvorgang auftreten, entlastet werden.

Wie außerdem aus Fig. 4a zu ersehen ist, weist der Grundkörper im Bereich der Zentrumslücke 60 zwischen den Plattensitzen eine gegenüber den Plattensitzen axial zurückversetzte konkave Kontur 72 auf, die dafür sorgt, dass es aufgrund der in diesem Bereich beim Bohrvorgang angreifenden Biegekräfte zu keiner unzulässigen Kerbwirkung kommt.

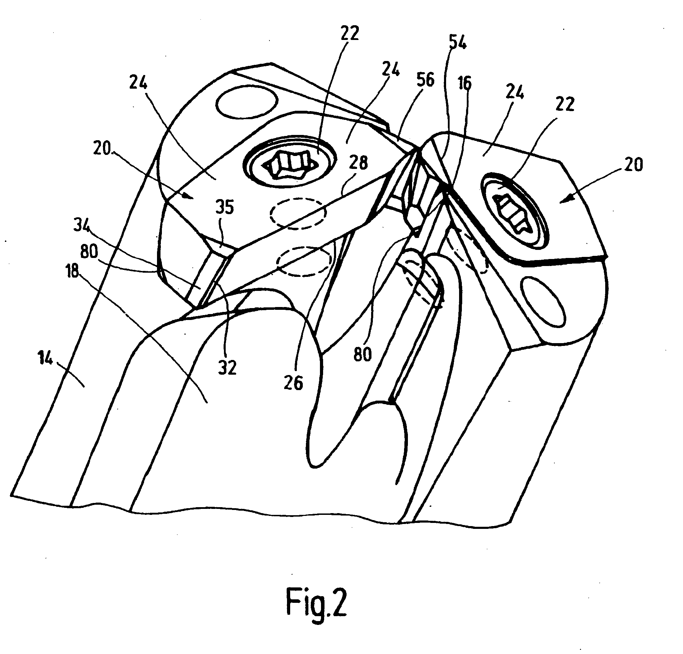

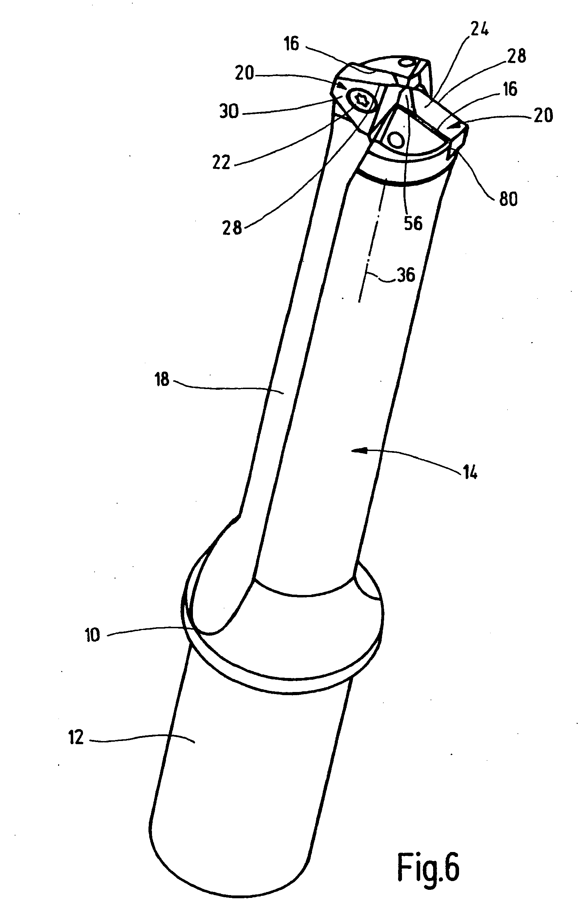

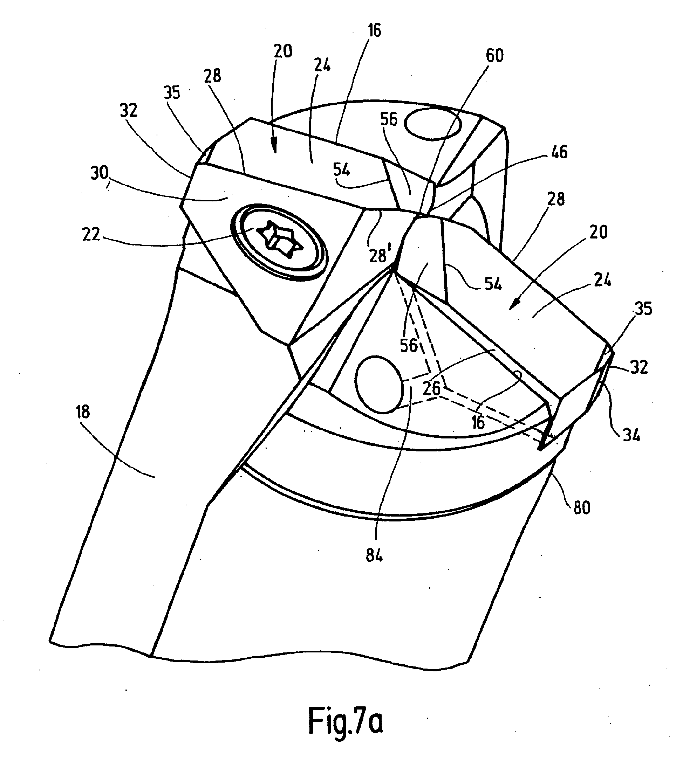

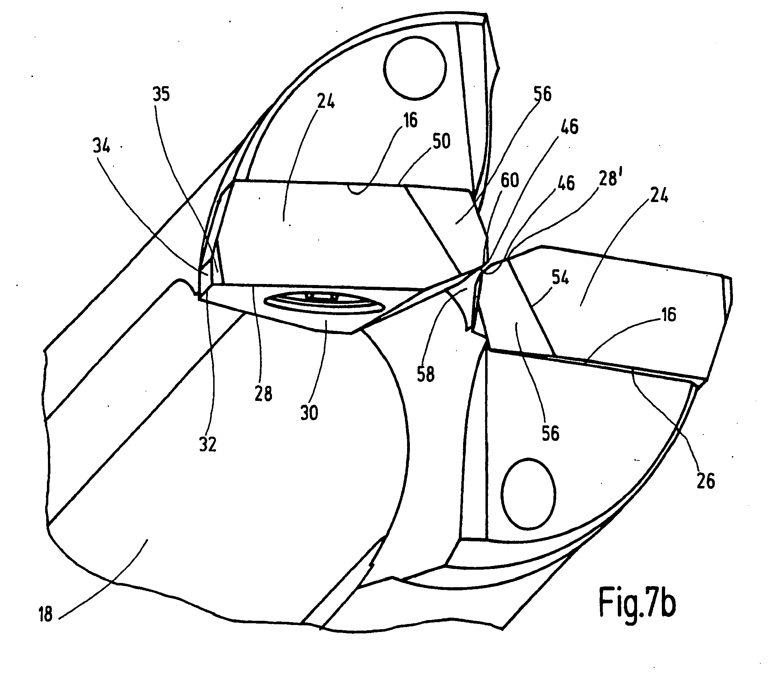

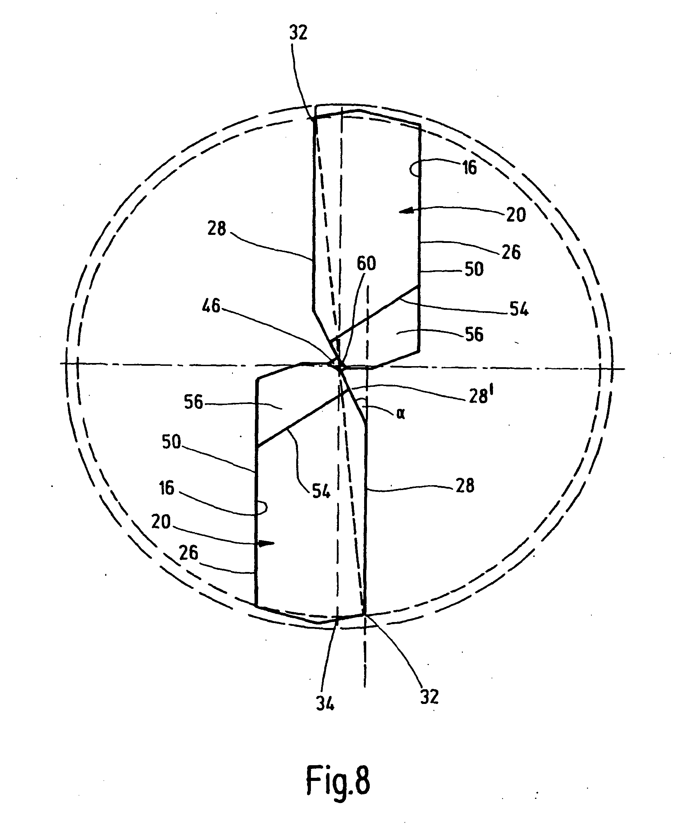

Bei dem Ausführungsbeispiel nach Fig. 6 bis 9 weisen die Schneidplatten 20 eine Spanfläche 30 und eine von dieser abgewandten Auflagefläche 26 auf, die planparallel zueinander ausgerichtet sind. Die in die Spanfördernut 18 mündende Spanfläche 30 wird durch die Hauptschneide 28 und die daran anschließende Freifläche 30 begrenzt. Radial nach außen hin schließen sich an die Hauptschneide 28 und die Spanfläche 30 eine zugleich als Führungskante ausgebildete Nebenschneide 32 und eine Führungsfase 34 an. Die Nebenschneide 32 und die Führungsfase 34 erstrecken sich im Anschluss an eine Schneidfase 35 über die lokale Plattenhöhe hinweg parallel zur Bohrerachse 36. Die Führungsfasen 34 der beiden Schneidplatten 20 unterstützen die Führung des Bohrwerkzeugs im Bohrloch, während der Spitzenwinkel zwischen den Hauptschneiden 28 der beiden Schneidplatten 20 eine Zentrierung des Bohrers im Bohrloch gewährleistet. Die Befestigungsöffnung 44 für den Durchgriff der Befestigungsschrauben 22 greift quer zwischen Spanfläche 30 und Auflagefläche 26 durch die Wechselschneidplatten hindurch. Wie vor allem aus Fig. 8 zu ersehen ist, weisen die Hauptschneiden 28 der Wechselschneidplatten 20 eine um einen Querschneidenwinkel a von etwa 30° abgewinkelte zentrale Schneidenpartie 28' auf, die sich bis zur zentralen Plattenecke 46 erstreckt. Die Freifläche 24 weist eine von einer Scheitellinie 54 bis zur inneren Plattenecke 46 verlaufende, nach innen geneigte Leitschräge 56 auf. Der Scheitelwinkel β zwischen der radial äußeren Freiflächenpartie 24 und der Leitschräge 56 beträgt bei dem gezeigten Ausführungsbeispiel etwa 140°. Die Scheitellinie 54 geht dabei von einer Position innerhalb der zentralen Schneidenpartie 28' aus und reicht bis zur rückwärtigen Plattenkante 50. Wie aus Fig. 2b zu ersehen ist, weist die zentrale Leitschräge 56 eine durch die Scheitellinie 54, einen Abschnitt der zentralen Schneidenpartie 28' und einen Abschnitt der Plattenkante 50 begrenzten mehreckigen Umriss auf. Weiter ist im Bereich der zentralen Plattenecke 46 eine zum Grundkörper 14 hin randoffene Freisparung 58 angeordnet.

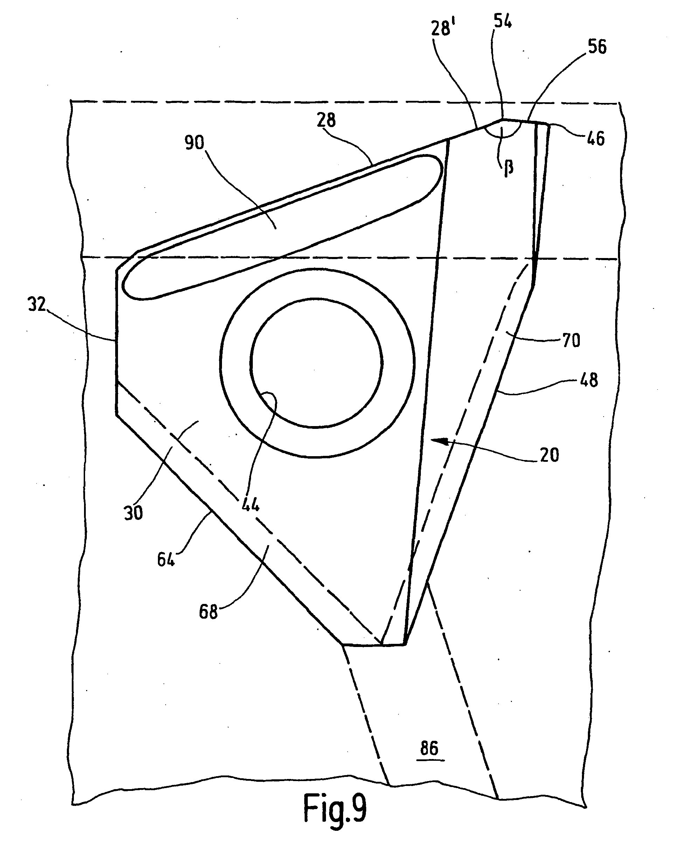

Im montierten Zustand weisen die Wechselschneidplatten 20 im Bereich ihrer Plattenecken 46 unter Bildung der Zentrumslücke 60 einen kleinen Abstand von 0,05 bis 0,2 mm auf. Die zentralen Schneidenpartien 28' der beiden Wechselschneidplatten sind dabei so einander zugeordnet, dass sie sich zu einer durch die Zentrumslücke 60 unterbrochenen Querschneide ergänzen. Wie insbesondere aus Fig. 9 zu ersehen ist, schließen die Freiflächen 24 in ihrem radial äußeren Bereich in Vorschubrichtung einen positiven Spitzenwinkel ein, der dafür sorgt, dass der Bohrer beim Bohrvorgang am Bohrungsgrund zentriert wird. Im Bereich der Leitschrägen 56 dagegen sind die zentralen Schneidenpartien 28' der beiden Schneidplatten in Vorschubrichtung negativ, sich zur Zentrumslücke 60 hin trichterartig ergänzend geneigt und bilden einen Trichterwinkel. Auch dieser Winkel trägt zur Zentrierung am Bohrungsgrund bei und sorgt dafür, dass die im Zentrum bei der Spanerzeugung entstehenden Druckkräfte über eine größere Fläche verteilt und dadurch reduziert werden.

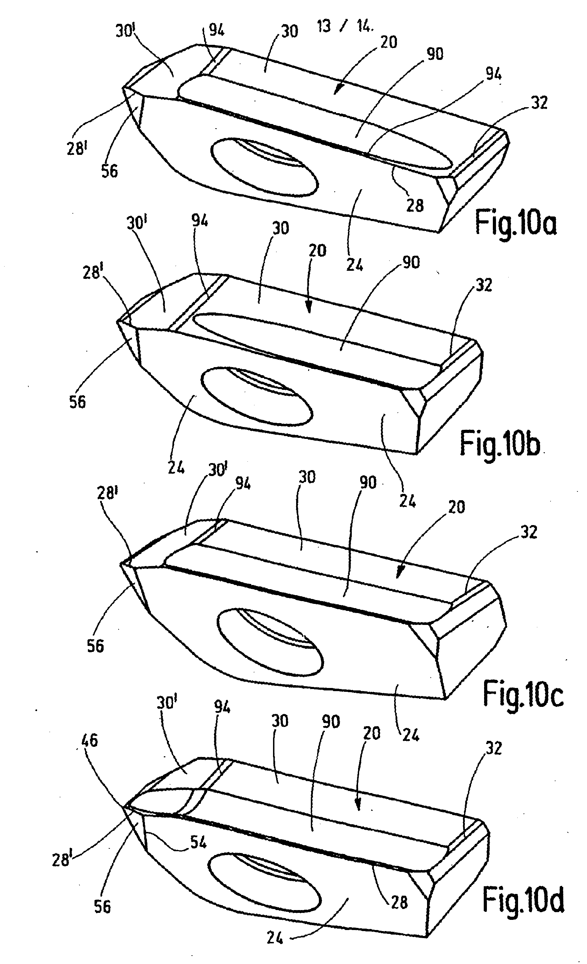

Bei den in den Figuren 10a bis d gezeigten Ausführungsbeispielen sind im Bereich der Spanflächen 30 der Wechselschneidplatten 20 Spanformmulden 90 vorgesehen, die unmittelbar oder über eine Fase 92 an die Hauptschneide 28 angrenzen und im wesentlichen parallel zu dieser verlaufen. Die vier Ausführungsbeispiele unterscheiden sich im Wesentlichen in der Anordnung und Ausbildung der Spanformmulde 90 in Bezug auf die Hauptschneide 28: Bei dem Ausführungsbeispiel nach Fig. 10a taucht die Spanformmulde leicht in den äußeren Teil der Spanfläche 30' der Querschneide 28' ein und taucht in einem kleinen Abstand vor der Nebenschneide 32 aus der Spanfläche 30 aus. Bei dem Ausführungsbeispiel nach Fig. 10b durchdringt die Spanformmulde 90 die Nebenschneide 32 und taucht vor der Trennlinie 94 zwischen der Spanfläche 30 und dem inneren Spanflächenteil 30' aus der Spanfläche 30 aus. Das Ausführungsbeispiel nach Fig. 10c weist eine im wesentlichen zylindrische Spanformmulde auf, die exakt parallel zur Hauptschneide 28 außerhalb der Querschneide verläuft und sowohl die Nebenschneide 32 als auch die Trennlinie 94 zum inneren Spanflächenteil 30' durchdringt. Bei dem in Fig. 10d gezeigten Ausführungsbeispiel ist eine Spanformmulde vorgesehen, die sich sowohl über den äußeren Teil der Spanfläche 30 als auch entlang der zentralen Schneidenpartie 28' über den inneren Spanflächenteil 30' bis nahe zur zentralen Plattenecke 46 erstreckt. Die Spanformmulden 90 haben bei den in den Figuren 10a bis d gezeigten Ausführungsbeispielen vor allem die Aufgabe, den Span beim Bohrvorgang so zu formen, dass er von der Bohrerachse nach außen gedrängt wird.

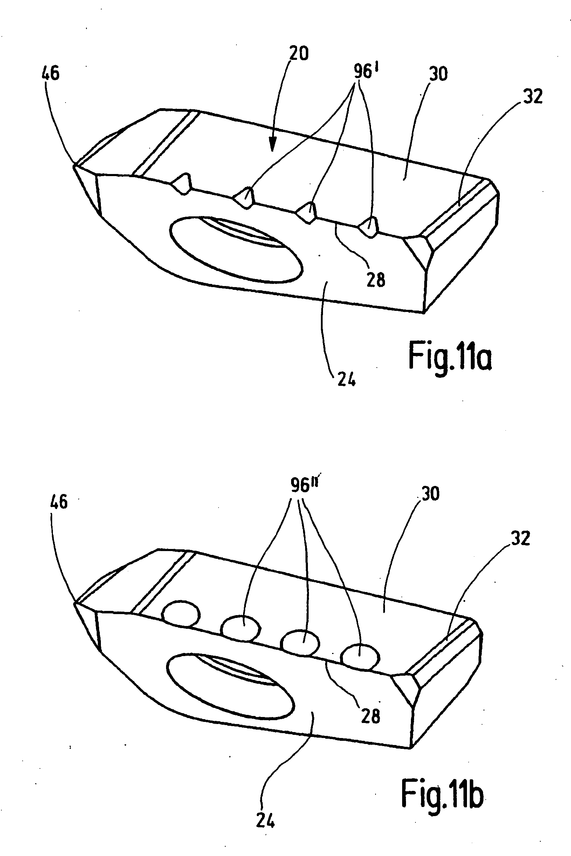

Eine weitere Verbesserung in dieser Hinsicht kann mit den in Fig. 11a und b gezeigten Ausführungsbeispielen erzielt werden, bei denen im Bereich der Hauptschneide 28 im Abstand voneinander angeordnete Spanbrecherkerben 96', 96" vorgesehen sind, die die Hauptschneide 28 durchdringen. Die Spanbrecherkerben 96 haben die Aufgabe, den beim Bohrvorgang entstehenden Span so zu verformen und zu brechen, dass er leichter über die Spanfördernuten des Bohrwerkzeugs abtransportiert werden kann.

Bei dem Ausführungsbeispiel nach Fig. 9, das eine Wechselschneidplatte für den liegenden Einsatz im Bohrerkörper zeigt, ist im Bereich der Spanfläche gleichfalls eine Spanformmulde 90 angedeutet. Weiter sind dort Auflagefasen 68 und 70 vorgesehen, die zusammen mit den benachbarten Sitzflächen des Plattensitzes einen kanalartigen Freiraum 80 bilden, der mit einem Kühlkanal 86 im Grundkörper kommuniziert.

Zusammenfassend ist folgendes festzuhalten: Die Erfindung bezieht sich auf ein zweischneidiges Bohrwerkzeug. Das Bohrwerkzeug weist einen um eine Bohrerachse 36 drehbaren Grundkörper 14 auf, in welchem stirnseitig zwei Plattensitze 16 zur Aufnahme von gleich ausgebildeten Wechselschneidplatten 20 angeordnet sind. Die Wechselschneidplatten weisen je eine an einer Hauptschneide 28 unter Bildung eines Schneidkeils anschließende Spanfläche 30 und Freifläche 24 auf. Die Hauptschneiden 28 der Wechselschneidplatten 20 ergänzen sich im Bereich einer zentralen, abgewinkelten Schneidenpartie 28' zu einer durch eine Zentrumslücke 60 unterbrochenen Querschneide. Ziel der Erfindung ist es, dass die Bruchgefahr im zentralen Bereich der Wechselschneidplatten verringert und eine bessere Führung des Werkzeugs erzielt wird. Hierzu wird gemäß der Erfindung vorgeschlagen, dass die Wechselschneidplatten 20 an ihrer Freifläche eine von einer Scheitellinie 54 bis zur zentralen Plattenecke 46 verlaufende, geneigte Leitschräge 56 aufweisen, wobei die Freiflächen 24 im radial äußeren Bereich in Vorschubrichtung positiv und im Bereich ihrer Leitschrägen 56 negativ geneigt sind. Die Scheitellinie 54 geht dabei von einer Position innerhalb einer zentralen, abgewinkelten Schneidenpartie 28' aus.

## Patentansprüche

1. Bohrwerkzeug mit einem um eine Bohrerachse (36) drehbaren Grundkörper (14), mit zwei im Spitzenbereich des Grundkörpers (14) angeordneten Plattensitzen (16) und mit in die Plattensitze (16) auswechselbar eingesetzten, an einer zentralen Plattenecke (46) über die Bohrerachse (36) hinweg unter Freilassung einer Zentrumslücke (60) einander zugewandten Wechselschneidplatten (20), die eine von einer radial äußeren Führungsfase (34) bis zur zentralen Plattenecke (46) reichende Hauptschneide (28) und je eine sich im Bereich der Hauptschneide (28) unter Bildung eines Schneidkeils treffende Spanfläche (30) und Freifläche (24) aufweisen, wobei die Hauptschneiden (28) der Wechselschneidplatten (20) sich im Bereich einer zentralen, abgewinkelten Schneidenpartie (28') zu einer durch die Zentrumslücke (60) unterbrochenen Querschneide ergänzen, wobei die Wechselschneldplatten (20) an ihrer Freifläche (24) eine von einer vom Bereich ihrer zentralen Schneidenpartie (28') ausgehenden Scheitellinie (54) bis zur zentralen Plattenecke (46) verlaufende, geneigte Leitschräge (56) aufweisen, wobei die Freiflächen (24) im radial äußeren Bereich in Vorschubrichtung positiv (γ), sich pfeilartig ergänzend und im Bereich ihrer Leitschrägen (56) in Vorschubrichtung negativ (δ), sich zur Zentrumslücke (60) hin trichterartig ergänzend geneigt sind, wobei die Wechselschneidplatten eine von der Freifläche (24) abgewandte Auflagefläche (26) und eine die Freifläche (24) und die Auflagefläche (26) durchdringende Durchtrittsöffnung (44) für ein Befestigungsorgan (22) aufweisen, und wobei die Leitschräge (56) in Richtung der jeweiligen Auflagefläche (26) geneigt ist, **dadurch gekennzeichnet, dass** die Scheitellinie (54) von einer Position innerhalb der zentralen Schneidenpartie (28') ausgeht und zu einer gegenüberliegenden Plattenkante (50) verläuft, wobei sich die zentrale Schneidenpartie (28') und die gegenüberliegende Plattenkante (50) in der zentralen Plattenecke (46) treffen.

2. Bohrwerkzeug mit einem um eine Bohrerachse (36) drehbaren Grundkörper (14), mit zwei im Spitzenbereich des Grundkörpers (14) angeordneten Plattensitzen (16) und mit in die Plattensitze (16) auswechselbar eingesetzten, an einer zentralen Plattenecke (46) über die Bohrerachse (36) hinweg unter Freilassung einer Zentrumslücke (60) einander zugewandten Wechselschneidplatten (20), die eine von einer radial äußeren Führungsfase (34) bis zur zentralen Plattenecke (46) reichende Hauptschneide (28) und je eine sich im Bereich der Hauptschneide (28) unter Bildung eines Schneidkeils treffende Spanfläche (30) und Freifläche (24) aufweisen, wobei die Hauptschneiden (28) der Wechselschneidplatten (20) sich im Bereich einer zentralen, abgewinkelten Schneidenpartie (28') zu einer durch die Zentrumslücke (60) unterbrochenen Querschneide ergänzen, wobei die die Wechselschneidplatten (20) an ihrer Freifläche (24) eine von einer vom Bereich ihrer zentralen Schneidenpartie (28') ausgehenden Scheitellinie (54) bis zur zentralen Plattenecke (46) verlaufende, geneigte Leitschräge (56) aufweisen, wobei die Freiflächen (24) im radial äußeren Bereich in Vorschubrichtung positiv (γ), sich pfeilartig ergänzend und im Bereich ihrer Leitschrägen (56) in Vorschubrichtung negativ (δ), sich zur Zentrumslücke (60) hin trichterartig ergänzend geneigt sind, **dadurch gekennzeichnet, dass** die Wechselschneidplatten eine von der Spanfläche (30) abgewandte Auflagefläche (26) und eine, die Spanfläche (30) und die Auflagefläche (26) durchdringende Durchtrittsöffnung (44) für ein Befestigungsorgan (22) aufweisen und dass die Scheitellinie (54) von einer Position innerhalb der zentralen Schneidenpartie (28') ausgeht und zu einer anlagenflächenseitigen Plattenkante (50) verläuft.

3. Bohrwerkzeug nach Anspruch 1 oder 2, **dadurch gekennzeichnet, dass** die zur zentralen und zur radial äußeren Schneidenpartie der Hauptschneide (28) gehörenden Spanflächenabschnitte (30) im Übergangsbereich einen Querschneidenwinkel (α) kleiner 70° einschließen.

4. Bohrwerkzeug nach Anspruch 3, **dadurch gekennzeichnet, dass** der Querschneidenwinkel (α) 20° bis 40° beträgt.

5. Bohrwerkzeug nach Anspruch 3 oder 4, **dadurch gekennzeichnet, dass** die Übergangskante zwischen den beiden Spanflächenabschnitten (30) gerundet ist.

6. Bohrwerkzeug nach einem der Ansprüche 1 bis 5, **dadurch gekennzeichnet, dass** die radial äußere Freiflächenpartie (24) und die zentrale Leitschräge (56) im Bereich der Scheitellinie (54) einen Scheitelwinkel (β) < 170° miteinander einschließen.

7. Bohrwerkzeug nach Anspruch 6, **dadurch gekennzeichnet, dass** der Scheitelwinkel (β) 120° bis 160° beträgt.

8. Bohrwerkzeug nach einem der Ansprüche 1, 3 bis 7, **dadurch gekennzeichnet, dass** die zentrale Leitfläche (56) einen durch die Scheitellinie (54), einen Abschnitt der zentralen Schneidenpartie (28') und einen Abschnitt der benachbarten Plattenkante (50) begrenzten dreieckigen Umriss aufweist.

9. Bohrwerkzeuge nach Anspruch 8, **dadurch gekennzeichnet, dass** die zwischen der Scheitellinie (54) und der Plattenecke (46) gemessene Höhe der im Umriss dreieckigen zentralen Leitfläche (56) ein Vielfaches, vorzugsweise das fünf- bis zwanzigfache der Weite der Zentrumslücke (60) beträgt.

10. Bohrwerkzeug nach einem der Ansprüche 2 bis 7, **dadurch gekennzeichnet, dass** die zentrale Leitfläche (56) einen durch die Scheitellinie (54), einen Abschnitt der zentralen Schneidenpartie (28') und einen Abschnitt der anlagenflächenseitigen Plattenkante (50) begrenzten mehreckigen Umriss aufweist.

11. Bohrwerkzeuge nach Anspruch 10, **dadurch gekennzeichnet, dass** der zwischen der Scheitellinie (54) und der zentralen Plattenecke (46) gemessene Durchmesser der im Umriss mehreckigen zentralen Leitfläche (56) ein Vielfaches, vorzugsweise das fünf- bis zwanzigfache der Weite der Zentrumslücke (60) beträgt.

12. Bohrwerkzeug nach einem der Ansprüche 1 bis 11, **dadurch gekennzeichnet, dass** die Weite der Zentrumslücke (60) < 0,3 mm beträgt.

13. Bohrwerkzeug nach einem der Ansprüche 1 bis 12, **dadurch gekennzeichnet, dass** die einander entsprechenden Abschnitte der Hauptschneiden (28,28') der beiden Wechselschneidplatten (20) einen Winkel ungleich 180° miteinander einschließen.

14. Bohrwerkzeug nach Anspruch 13, **dadurch gekennzeichnet, dass** der Winkelversatz gegenüber 180° zwischen 1° und 4° beträgt.

15. Bohrwerkzeug nach einem der Ansprüche 1 bis 14, **dadurch gekennzeichnet, dass** die beiden Schneidplatten (20) axial gegeneinander versetzt sind.

16. Bohrwerkzeug nach Anspruch 15, **dadurch gekennzeichnet, dass** der Axialversatz in der Größenordnung 1/100 mm, vorzugsweise 0,005 mm bis 0,05 mm beträgt.

17. Bohrwerkzeug nach einem der Ansprüche 1 bis 16, **dadurch gekennzeichnet, dass** der Grundkörper (14) im Bereich der Zentrumslücke (60) zwischen den Plattensitzen (16) eine gegenüber den Plattensitzen axial zurückversetzte konkave Kontur (72) aufweist.

18. Bohrwerkzeug nach einem der Ansprüche 1 bis 17, **dadurch gekennzeichnet, dass** der Plattensitz (16) und die Wechselschneidplatte (20) komplementär ineinander greifende Verzahnungen zur Erzeugung eines radialen Formschlusses aufweisen.

19. Bohrwerkzeug nach einem der Ansprüche 1 bis 18, **dadurch gekennzeichnet, dass** die Wechselschneidplatten (20) mit ihren der Spanfläche (30) abgewandten Anlageflächen (48,64) und mit ihrer Auflagefläche (26) gegen komplementäre Sitzflächen des Plattensitzes anliegen, dass die Anlageflächen (48,64) über je eine mit den benachbarten Sitzflächen des Plattensitzes (16) einen kanalartigen Freiraum (80) bildende Auflagefase (68,70) in die Auflagefläche (26) übergehen und dass in jeden Plattensitz im Bereich des kanalartigen Freiraums (80) ein im Grundkörper (14) angeordneter, mit einem Kühlschmiermittel beaufschlagbarer Kühlkanal (84,86) mündet.

20. Bohrwerkzeug nach Anspruch 19, **dadurch gekennzeichnet, dass** der kanalartige Freiraum (80) zur Zentrumslücke (60) hin offen ist.

21. Bohrwerkzeug nach einem der Ansprüche 19 oder 20, **dadurch gekennzeichnet, dass** der kanalartige Freiraum (80) zur radial äußeren Führungsfase (34) hin offen ist.

22. Bohrwerkzeug nach einem der Ansprüche 19 bis 21, **dadurch gekennzeichnet, dass** die von der Spanfläche (30) abgewandten Anlageflächen (48,64) der Wechselschneidplatte und deren Auflagefasen (68, 70) über eine gerundete Plattenecke (66, 69) ineinander übergehen.

23. Bohrwerkzeug nach Anspruch 22, **dadurch gekennzeichnet, dass** der Kühlkanal (84,86) in der Nähe der abgerundeten Plattenecke (66) über eine Mündungsöffnung (82) in den Plattensitz (16) mündet.

24. Bohrwerkzeug nach einem der Ansprüche 1 bis 23, **dadurch gekennzeichnet, dass** die Wechselschneidplatten (20) im Bereich ihrer Spanflächen (30) eine zumindest an einen Teil der Hauptschneide (28, 28') angrenzende Spanformmulde (90) aufweisen.

25. Bohrwerkzeug nach Anspruch 24, **dadurch gekennzeichnet, dass** die Spanformmulde (90) zumindest partiell in den Bereich der zentralen Schneidenpartie (28') hineinreicht.

26. Bohrwerkzeug nach Anspruch 24 oder 25, **dadurch gekennzeichnet, dass** die Spanformmulde (90) in den Bereich der an die Leitschräge angrenzende Spanfläche (30) heranreicht.

27. Bohrwerkzeug nach Anspruch 26, **dadurch gekennzeichnet, dass** die Spanformmulde (90) bis in die Nähe der zentralen Plattenecke heranreicht.

28. Bohrwerkzeug nach einem der Ansprüche 24 bis 27, **dadurch** gekenn-zeichnet, dass die Spanformmulde (90) bis an die äußere Nebenschneide (32) heranreicht.

29. Bohrwerkzeug nach Anspruch 28, **dadurch gekennzeichnet, dass** die Spanformmulde (90) die äußere Nebenschneide (32) durchdringt.

30. Bohrwerkzeug nach einem der Ansprüche 24 bis 29, **dadurch gekennzeichnet, dass** die Hauptschneide (28) und die Spanformmulde (90) durch eine im wesentlichen parallel zur Hauptschneide (28) verlaufende Fase (92) voneinander getrennt sind.

31. Bohrwerkzeug nach einem der Ansprüche 24 bis 30, **dadurch gekennzeichnet, dass** die Spanformmulde (90) eine konkave Bodenfläche aufweist.

32. Bohrwerkzeug nach einem der Ansprüche 24 bis 31, **dadurch gekennzeichnet, dass** die Spanformmulde (90) eine teilzylindrische konkave Bodenfläche aufweist.

33. Bohrwerkzeug nach einem der Ansprüche 1 bis 32, **dadurch gekennzeichnet, dass** die Hauptschneide (28) durch im Abstand voneinander angeordnete Spanbrecherkerben (96', 96") unterbrochen ist.

34. Bohrwerkzeug nach Anspruch 33, **dadurch gekennzeichnet, dass** die Spanbrecherkerben (96', 96") außerhalb der zentralen Schneidenpartie (28') angeordnet sind.

35. Bohrwerkzeug nach Anspruch 33, **dadurch gekennzeichnet, dass** auch im Bereich der zentralen Schneidenpartie (28') Spanbrecherkerben angeordnet sind.

36. Bohrwerkzeug nach einem der Ansprüche 1 bis 35, **dadurch gekennzeichnet, dass** die Nebenschneide (32) in ihrem Verlauf parallel zur Bohrerachse oder um einen Winkel bis 3° divergierend gegenüber der Bohrerachse ausgerichtet ist.

37. Wechselschneidplatte für zweischneidige Bohrwerkzeuge mit einer von einer äußeren (32) bis zu einer inneren Plattenecke (46) verlaufenden Hauptschneide (28), mit je einer an diese unter Bildung eines Schneidkeils anschließenden Spanfläche (30) und Freifläche (24), mit einer auf der der Freifläche (24) abgewandten Plattenseite angeordneten Auflagefläche (26) und mit einer die Freifläche (24) und die Auflagefläche (26) durchdringenden Durchtrittsöffnung (44) für ein Befestigungsorgan (22), wobei die Freifläche (24) eine von einer im Bereich zwischen Durchtrittsöffnung (44) und innerer Plattenecke (46) angeordneten, von einer abgewinkelten zentralen Schneidenpartie (28') der Hauptschneide (28) ausgehenden Scheitellinie (54) bis zur inneren Plattenecke (46) verlaufende, in Richtung Auflagefläche (26) geneigte Leitschräge (56) aufweist, **dadurch gekennzeichnet, dass** die Scheitellinie (54) von einer Position innerhalb der zentralen Schneidenpartie (28') ausgeht und zu einer gegenüberliegenden Plattenkante (50) verläuft, wobei sich die zentrale Schneidenpartie (28') und die gegenüberliegende Plattenkante (50) in der inneren Plattenecke (46) treffen.

38. Wechselschneidplatte nach Anspruch 37, **dadurch gekennzeichnet, dass** die die Durchtrittsöffnung (44) enthaltende Freiflächenpartie (24) und die Leitschräge (56) im Bereich der Scheitellinie (54) einen Scheitelwinkel (β) kleiner 170°, vorzugsweise zwischen 120° und 160° miteinander einschließen.

39. Wechselschneidplatte nach Anspruch 38, **dadurch gekennzeichnet, dass** die Leitschräge (56) eines durch die Scheitellinie (54), einen Abschnitt der zentralen Schneidenpartie (28') und einen Abschnitt der benachbarten Plattenkante (50) begrenzten dreieckigen Umriss aufweist.

40. Wechselschneidplatte nach einem der Ansprüche 37 bis 39, **dadurch gekennzeichnet, dass** im Bereich der zentralen Plattenecke (46) auf der Seite der Auflagefläche (26) eine Freisparung (58) angeordnet ist.

41. Wechselschneidplatte nach einem der Ansprüche 37 bis 40, **dadurch gekennzeichnet, dass** die die Durchtrittsöffnung (44) enthaltene, äußere Freiflächenpartie (24) und die Leitschräge (56) im Bereich der Scheitellinie (54) einen Scheitelwinkel (β) kleiner 170° miteinander einschließen.

42. Wechselschneidplatte nach Anspruch 41, **dadurch gekennzeichnet, dass** der Scheitelwinkel (β) 120° bis 160° beträgt.

43. Wechselschneidplatte nach einem der Ansprüche 37 bis 42, **dadurch gekennzeichnet, dass** die Auflagefläche (26) über Auflagefasen (68,70) in die benachbarten, der Spanfläche (30) abgewandten Anlageflächen (48,64) übergehen.

44. Wechselschneidplatte nach Anspruch 43, **dadurch gekennzeichnet, dass** die der Spanfläche (30) abgewandten Anlageflächen (48, 64) und deren Auflagefasen (68, 70) über eine gerundete Plattenecke (66, 69) ineinander übergehen.

45. Wechselschneidplatte für zweischneidige Bohrwerkzeuge mit einer von einer äußeren (32) bis zu einer inneren Plattenecke (46) verlaufenden Hauptschneide (28), mit je einer an diese unter Bildung eines Schneidkeils anschließenden Spanfläche (30) und Freifläche (24), wobei die Freifläche (24) eine von einer abgewinkelten zentralen Schneidenpartie (28') der Hauptschneide (28) ausgehenden Scheitellinie (54) bis zur inneren Plattenecke (46) verlaufende, gegenüber der äußeren Freiflächenpartie geneigte Leitschräge (56) aufweist, **dadurch gekennzeichnet**, das die Wechselschneidplatte eine von der Spanfläche (30) abgewandte Auflagefläche (26) und eine, die Spanfläche (30) und die Auflagefläche (26) durchdringende Durchtrittsöffnung (44) für ein Befestigungsorgan aufweist, und dass die Scheitellinie (54) von einer Position innerhalb der zentra-len Schneidenpartie (28') ausgeht und zu einer auflagenflächenseitigen Plattenkante (50) verläuft.

46. Wechselschneidplatte nach Anspruch 45, **dadurch gekennzeichnet, dass** die Leitschräge (56) und die daran im Bereich der Scheitellinie (54) angrenzende äußere Freiflächenpartie (24) einen Scheitelwinkel (β) kleiner 170°, vorzugsweise zwischen 120° und 160° miteinander einschließen.

47. Wechselschneidplatte nach Anspruch 46, **dadurch gekennzeichnet, dass** der Scheitelwinkel (β) 120° bis 160° beträgt.

48. Wechselschneidplatte nach Anspruch 45 bis 47, **dadurch gekennzeichnet, dass** die Leitschräge (56) einen durch die Scheitellinie (54), einen Abschnitt der zentralen Schneidenpartie (28') und einen Abschnitt der auflagenflächenseitigen Plattenkante (50) begrenzten mehreckigen Umriss aufweist.

49. Wechselschneidplatte nach einem der Ansprüche 37 bis 48, **gekennzeichnet durch** eine im Bereich der Spanfläche (30) angeordnete Spanformmulde (90), die zumindest an einen Teil der Hauptschneide (28, 28') angrenzt.

50. Wechselschneidplatte nach Anspruch 49, **dadurch gekennzeichnet, dass** die Spanformmulde (90) zumindest partiell in den Bereich der zentralen Schneidenpartie (28') hineinreicht.

51. Wechselschneidplatte nach Anspruch 49 oder 50, **dadurch gekennzeichnet, dass** die Spanformmulde (90) in den Bereich der an die Leitschräge angrenzende Spanfläche (30) heranreicht.

52. Wechselschneidplatte nach Anspruch 51, **dadurch gekennzeichnet, dass** die Spanformmulde (90) bis in die Nähe der zentralen Plattenecke heranreicht.

53. Wechselschneidplatte nach einem der Ansprüche 49 bis 52, **dadurch gekennzeichnet, dass** die Spanformmulde (90) bis an die äußere Nebenschneide (32) heranreicht.

54. Wechselschneidplatte nach Anspruch 53, **dadurch gekennzeichnet, dass** die Spanformmulde (90) die äußere Nebenschneide (32) durchdringt.

55. Wechselschneidplatte nach einem der Ansprüche 49 bis 54, **dadurch gekennzeichnet, dass** die Hauptschneide (28) und die Spanformmulde (90) durch eine im wesentlichen parallel zur Hauptschneide (28) verlaufende Fase (92) voneinander getrennt sind.

56. Wechselschneidplatte nach einem der Ansprüche 49 bis 55, **dadurch gekennzeichnet, dass** die Spanformmulde (90) eine konkave Bodenfläche aufweist.

57. Wechselschneidplatte nach einem der Ansprüche 49 bis 56, **dadurch gekennzeichnet, dass** die Spanformmulde (90) eine teilzylindrische konkave Bodenfläche aufweist.

58. Wechselschneidplatte nach einem der Ansprüche 37 bis 57, **dadurch gekennzeichnet, dass** die Hauptschneide (28) durch im Abstand voneinander angeordnete Spanbrecherkerben (96', 96") unterbrochen ist.

59. Wechselschneidplatte nach Anspruch 58, **dadurch gekennzeichnet, dass** die Spanbrecherkerben (96'. 96") außerhalb der zentralen Schneidenpartie (28') angeordnet sind.

60. Wechselschneidplatte nach Anspruch 58, **dadurch gekennzeichnet, dass** auch im Bereich der zentralen Schneidenpartie (28') Spanbrecherkerben angeordnet sind.

## Claims

1. A drilling tool having a basic body (14) rotatable about a drill axis (36), having two insert seats (16) arranged in the point region of the basic body (14), and having interchangeable inserts (20) which are interchangeably inserted into the insert seats (16), face one another at a central insert corner (46) over the drill axis (36) while leaving a center gap (60) clear, and have a main cutting edge (28), extending from a radially outer guide bevel (34) up to the central insert corner (46), and a respective rake face (30) and flank (24) which meet in the region of the main cutting edge (28) while forming a cutting wedge, the main cutting edges (28) of the interchangeable inserts (20) complementing one another in the region of a central, angled cutting-edge part (28') to form a chisel edge interrupted by the center gap (60), the interchangeable inserts (20), at their flank (24), having an inclined deflecting chamfer (56) running from an apex line (54), starting from the region of their central cutting-edge part (28'), up to the central insert corner (46), the flanks (24) being inclined positively (γ) in the feed direction in the radially outer region in such a way as to complement one another in an arrow-like manner and negatively (δ) in the feed direction toward the center gap (60) in the region of their deflecting chamfers (56) in such a way as to complement one another in a funnel-like manner, the interchangeable inserts having a locating surface (26) remote from the flank (24) and a through-opening (44), passing through the flank (24) and the locating surface (26), for a fastening element (22), and the deflecting chamfer (56) being inclined in the direction of the respective locating surface (26), **characterized in that** the apex line (54) starts from a position within the central cutting-edge part (28') and runs to an opposite insert edge (50), the central cutting-edge part (28') and the opposite insert edge (50) meeting in the central insert corner (46).

2. A drilling tool having a basic body (14) rotatable about a drill axis (36), having two insert seats (16) arranged in the point region of the basic body (14), and having interchangeable inserts (20) which are interchangeably inserted into the insert seats (16), face one another at a central insert corner (46) over the drill axis (36) while leaving a center gap (60) clear, and have a main cutting edge (28), extending from a radially outer guide bevel (34) up to the central insert corner (46), and a respective rake face (30) and flank (24) which meet in the region of the main cutting edge (28) while forming a cutting wedge, the main cutting edges (28) of the interchangeable inserts (20) complementing one another in the region of a central, angled cutting-edge part (28') to form a chisel edge interrupted by the center gap (60), the interchangeable inserts (20), at their flank (24), having an inclined deflecting chamfer (56) running from an apex line (54), starting from the region of their central cutting-edge part (28'), up to the central insert corner (46), the flanks (24) being inclined positively (γ) in the feed direction in the radially outer region in such a way as to complement one another in an arrow-like manner and negatively (δ) in the feed direction toward the center gap (60) in the region of their deflecting chamfers (56) in such a way as to complement one another in a funnel-like manner, **characterized in that** the interchangeable inserts have a locating surface (26) remote from the rake face (30) and a through-opening (44), passing through the rake face (30) and the locating surface (26), for a fastening element (22), and **in that** the apex line (54) starts from a position within the central cutting-edge part (28') and runs to an insert edge (50) on the bearing-surface side.

3. The drilling tool as claimed in claim 1 or 2, **characterized in that** the rake-face sections (30) belonging to the central and the radially outer cutting-edge part of the main cutting edge (28) enclose a chisel-edge angle (α) of less than 70° in the transition region.

4. The drilling tool as claimed in claim 3, **characterized in that** the chisel-edge angle (α) is 20° to 40°.

5. The drilling tool as claimed in claim 3 or 4, **characterized in that** the transition edge between the two rake-face sections (30) is rounded.

6. The drilling tool as claimed in one of claims 1 to 5, **characterized in that** the radially outer flank part (24) and the central deflecting chamfer (56) enclose an apex angle (β) < 170° with one another in the region of the apex line (54).

7. The drilling tool as claimed in claim 6, **characterized in that** the apex angle (β) is 120° to 160°.

8. The drilling tool as claimed in one of claims 1, 3 to 7, **characterized in that** the central deflecting surface (56) has a triangular outline defined by the apex line (54), a section of the central cutting-edge part (28') and a section of the adjacent insert edge (50).

9. The drilling tool as claimed in claim 8, **characterized in that** the height of the central deflecting surface (56) of triangular outline, this height being measured between the apex line (54) and the insert corner (46), is a multiple of the width of the center gap (60), preferably five to twenty times the width of the center gap (60).

10. The drilling tool as claimed in one of claims 2 to 7, **characterized in that** the central deflecting surface (56) has a polygonal outline defined by the apex line (54), a section of the central cutting-edge part (28') and a section of the insert edge (50) on the bearing-surface side.

11. The drilling tool as claimed in claim 10, **characterized in that** the diameter of the central deflecting surface (56) of polygonal outline, this diameter being measured between the apex line (54) and the central insert corner (46), is a multiple of the width of the center gap (60), preferably five to twenty times the width of the center gap (60).

12. The drilling tool as claimed in one of claims 1 to 11, **characterized in that** the width of the center gap (60) is < 0.3 mm.

13. The drilling tool as claimed in one of claims 1 to 12, **characterized in that** those sections of the main cutting edges (28, 28') of the two interchangeable inserts (20) which correspond to one another enclose an angle with one another which is not equal to 180°.

14. The drilling tool as claimed in claim 13, **characterized in that** the angular offset relative to 180° is between 1° and 4°.

15. The drilling tool as claimed in one of claims 1 to 14, **characterized in that** the two inserts (20) are offset axially from one another.

16. The drilling tool as claimed in claim 15, **characterized in that** the axial offset is in the order of magnitude of 1/100 mm, preferably 0.005 mm to 0.05 mm.

17. The drilling tool as claimed in one of claims 1 to 16, **characterized in that** the basic body (14), in the region of the center gap (60) between the insert seats, has a concave contour (72) which is axially set back relative to the insert seats.

18. The drilling tool as claimed in one of claims 1 to 17, **characterized in that** the insert seat (16) and the interchangeable insert (20) have indentations, engaging one inside the other in a complementary manner, for producing radial interlocking.

19. The drilling tool as claimed in one of claims 1 to 18, **characterized in that** the interchangeable inserts (20), with their bearing surfaces (48, 64) remote from the rake face (30) and with their locating surface (26), bear against complementary seating surfaces of the insert seat, **in that** the bearing surfaces (48, 64), via a respective locating bevel (68, 70) forming a channel-like clearance space (80) with the adjacent seating surfaces of the insert seat (16), merge into the locating surface (26), and **in that** a cooling channel (84, 86) which is arranged in the basic body (14) and to which a cooling lubricant can be admitted opens into each insert seat in the region of the channel-like clearance space (80).

20. The drilling tool as claimed in claim 19, **characterized in that** the channel-like clearance space (80) is open toward the center gap (60).

21. The drilling tool as claimed in claim 19 or 20, **characterized in that** the channel-like clearance space (80) is open toward the radially outer guide bevel (34).

22. The drilling tool as claimed in one of claims 19 to 21, **characterized in that** the bearing surfaces (48, 64), remote from the rake face (30), of the interchangeable insert and their locating bevels (68, 70) merge into one another via a rounded insert corner (66, 69).

23. The drilling tool as claimed in claim 22, **characterized in that** the cooling channel (84, 86) opens into the insert seat (16) in the vicinity of the rounded-off insert corner (66) via an orifice opening (82).

24. The drilling tool as claimed in one of claims 1 to 23, **characterized in that** the interchangeable inserts (20), in the region of their rake faces (30), have a chip-forming depression (90) adjoining at least part of the main cutting edge (28, 28').

25. The drilling tool as claimed in claim 24, **characterized in that** the chip-forming depression (90) extends at least partly into the region of the central cutting-edge part (28').

26. The drilling tool as claimed in claim 24 or 25, **characterized in that** the chip-forming depression (90) extends into the region of the rake face (30) adjoining the deflecting chamfer.

27. The drilling tool as claimed in claim 26, **characterized in that** the chip-forming depression (90) extends right into the vicinity of the central insert corner.

28. The drilling tool as claimed in one of claims 24 to 27, **characterized in that** the chip-forming depression (90) extends up to the outer secondary cutting edge (32).

29. The drilling tool as claimed in claim 28, **characterized in that** the chip-forming depression (90) passes through the outer secondary cutting edge (32).

30. The drilling tool as claimed in one of claims 24 to 29, **characterized in that** the main cutting edge (28) and the chip-forming depression (90) are separated from one another by a bevel (92) running essentially parallel to the main cutting edge (28).

31. The drilling tool as claimed in one of claims 24 to 30, **characterized in that** the chip-forming depression (90) has a concave base surface.

32. The drilling tool as claimed in one of claims 24 to 31, **characterized in that** the chip-forming depression (90) has a partly cylindrical concave base surface.

33. The drilling tool as claimed in one of claims 1 to 32, **characterized in that** the main cutting edge (28) is interrupted by chip breaker notches (96', 96") arranged at a distance from one another.

34. The drilling tool as claimed in claim 33, **characterized in that** the chip breaker notches (96', 96") are arranged outside the central cutting-edge part (28').

35. The drilling tool as claimed in claim 33, **characterized in that** chip breaker notches are also arranged in the region of the central cutting-edge part (28').

36. The drilling tool as claimed in one of claims 1 to 35, **characterized in that** the secondary cutting edge (32) is oriented so as to run parallel to the drill axis or so as to diverge from the drill axis by an angle of up to 3°.

37. An interchangeable insert for double-cutting drilling tools, having a main cutting edge (28) which runs from an outer insert corner (32) up to an inner insert corner (46), having a respective rake face (30) and flank (24) which adjoin the main cutting edge (28) while forming a cutting wedge, having a locating surface (26) arranged on the insert side remote from the flank (24), and having a through-opening (44), passing through the flank (24) and the locating surface (26), for a fastening element (22), the flank (24) having a deflecting chamfer (56) which runs from an apex line (54), arranged in the region between through-opening (44) and inner insert corner (46), from an angled, central cutting-edge part (28') of the main cutting-edge (28) up to the inner insert corner (46) and is inclined in the direction of the locating surface (26), **characterized in that** the apex line (54) starts from a position within the central cutting-edge part (28') and runs to an opposite insert edge (50), the central cutting-edge part (28') and the opposite insert edge (50) meeting in the inner insert corner (46).

38. The interchangeable insert as claimed in claim 37, **characterized in that** the flank part (24) containing the through-opening (44) and the deflecting chamfer (56) enclose an apex angle (β) of less than 170°, preferably between 120° and 160°, with one another in the region of the apex line (54).

39. The interchangeable insert as claimed in claim 38, **characterized in that** the deflecting chamfer (56) has a triangular outline defined by the apex line (54), a section of the central cutting-edge part (28') and a section of the adjacent insert edge (50).

40. The interchangeable insert as claimed in one of claims 37 to 39, **characterized in that** a relieved portion (58) is arranged in the region of the central insert corner (46) on the side of the locating surface (26).

41. The interchangeable insert as claimed in one of claims 37 to 40, **characterized in that** the outer flank part (24) containing the through-opening (44) and the deflecting chamfer (56) enclose an apex angle (β) of less than 170° with one another in the region of the apex line (54).

42. The interchangeable insert as claimed in claim 41, **characterized in that** the apex angle (β) is 120° to 160°.

43. The interchangeable insert as claimed in one of claims 37 to 42, **characterized in that** the locating surface (26) merges via locating bevels (68, 70) into adjacent bearing surfaces (48, 64) remote from the rake face (30).

44. The interchangeable insert as claimed in claim 43, **characterized in that** the bearing surfaces (48, 64) remote from the rake face (30) and their locating bevels (68, 70) merge into one another via a rounded insert corner (66, 69).

45. An interchangeable insert for double-cutting drilling tools, having a main cutting edge (28) which runs from an outer insert corner (32) up to an inner insert corner (46), having a respective rake face (30) and flank (24) which adjoin the main cutting edge (28) while forming a cutting wedge, the flank (24) having a deflecting chamfer (56) which runs from an apex line (54), starting from an angled central cutting-edge part (28') of the main cutting edge (28), up to the inner insert corner (46) and is inclined relative to the outer flank part, **characterized in that** interchangeable insert has a bearing surface (26) remote from the rake face (30) and a through-opening (44) for a fastener member which penetrates the rake face (30) and the bearing surface (26) and **in that** the apex line (54) starts from a position within the central cutting-edge part (28') and runs to an insert edge (50) on the bearing-surface side.

46. The interchangeable insert as claimed in claim 45, **characterized in that** the deflecting chamfer (56) and the outer flank part (24) adjoining it in the region of the apex line (54) enclose an apex angle (β) of less than 170° with one another.

47. The interchangeable insert as claimed in claim 46, **characterized in that** the apex angle (β) is 120° to 160°.

48. The interchangeable insert as claimed in claims 45 to 47, **characterized in that** the deflecting chamfer (56) has a polygonal outline defined by the apex line (54), a section of the central cutting-edge part (28') and a section of the insert edge (50) on the bearing-surface side.

49. The interchangeable insert as claimed in one of claims 37 to 48, **characterized by** a chip-forming depression (90) which is arranged in the region of the rake face (30) and adjoins at least part of the main cutting edge (28, 28').

50. The interchangeable insert as claimed in claim 49, **characterized in that** the chip-forming depression (90) extends at least partly into the region of the central cutting-edge part (28').

51. The interchangeable insert as claimed in claim 49 or 50, **characterized in that** the chip-forming depression (90) extends into the region of the rake face (30) adjoining the deflecting chamfer.

52. The interchangeable insert as claimed in claim 51, **characterized in that** the chip-forming depression (90) extends right into the vicinity of the central insert corner.

53. The interchangeable insert as claimed in one of claims 49 to 52, **characterized in that** the chip-forming depression (90) extends up to the outer secondary cutting edge (32).

54. The interchangeable insert as claimed in claim 53, **characterized in that** the chip-forming depression (90) passes through the outer secondary cutting edge (32).

55. The interchangeable insert as claimed in one of claims 49 to 54, **characterized in that** the main cutting edge (28) and the chip-forming depression (90) are separated from one another by a bevel (92) running essentially parallel to the main cutting edge (28).

56. The interchangeable insert as claimed in one of claims 49 to 55, **characterized in that** the chip-forming depression (90) has a concave base surface.

57. The interchangeable insert as claimed in one of claims 49 to 56, **characterized in that** the chip-forming depression (90) has a partly cylindrical concave base surface.

58. The interchangeable insert as claimed in one of claims 37 to 57, **characterized in that** the main cutting edge (28) is interrupted by chip breaker notches (96', 96") arranged at a distance from one another.

59. The interchangeable insert as claimed in claim 58, **characterized in that** the chip breaker notches (96', 96") are arranged outside the central cutting-edge part (28').

60. The interchangeable insert as claimed in claim 58, **characterized in that** chip breaker notches are also arranged in the region of the central cutting-edge part (28').

## Revendications

1. Outil de perçage comprenant un corps de base (14) pouvant tourner autour d'un axe de perçage (36) ; deux sièges (16) situés dans la région pointue dudit corps de base (14) ; et des plaquettes de découpe alternative (20) qui sont insérées de manière interchangeable dans lesdits sièges (16), sont tournées l'une vers l'autre au niveau d'un coin central (46) au-delà de l'axe de perçage (36), en réservant un interstice central (60), sont munies d'un tranchant principal (28) s'étendant depuis un biseau de guidage (34) radialement extérieur jusqu'au coin central (46) desdites plaquettes, et sont respectivement dotées d'une surface (30) d'enlèvement de copeaux et d'une surface dépouillée (24) se rencontrant mutuellement dans la région dudit tranchant principal (28), en formant une zone cunéiforme de découpe, sachant que les tranchants principaux (28) des plaquettes de découpe alternative (20) se complètent dans la région d'une partie centrale coudée de découpe (28'), pour former un tranchant transversal interrompu par l'interstice central (60), sachant que lesdites plaquettes de découpe alternative (20) comportent, sur leur surface dépouillée (24), une rampe directrice inclinée (56) s'étendant depuis une ligne sommitale (54) partant de la région de leur partie centrale de découpe (28'), jusqu'au coin central (46) desdites plaquettes, sachant que les surfaces dépouillées (24) offrent une inclinaison positive (γ) dans la direction d'avance, dans la région radialement extérieure, avec complémentarité en forme de flèche, et une inclinaison négative (δ) dans la direction d'avance, dans la région de leurs rampes directrices (56), avec complémentarité infundibuliforme en direction de l'interstice central (60), sachant que les plaquettes de découpe alternative présentent une surface d'appui (26) tournée à l'opposé de la surface dépouillée (24) et un orifice de passage (44) qui traverse ladite surface dépouillée (24) et ladite surface d'appui (26), et est destiné à un organe de fixation (22), et sachant que la rampe directrice (56) est inclinée en direction de la surface d'appui (26) considérée, **caractérisé par le fait que** la ligne sommitale (24) part d'un emplacement situé à l'intérieur de la partie centrale de découpe (28') et gagne une arête (50) des plaquettes, tournée à l'opposé, ladite partie centrale de découpe (28'), et ladite arête (50) des plaquettes tournée à l'opposé, se rencontrant dans le coin central (46) desdites plaquettes.

2. Outil de perçage comprenant un corps de base (14) pouvant tourner autour d'un axe de perçage (36) ; deux sièges (16) situés dans la région pointue dudit corps de base (14) ; et des plaquettes de découpe alternative (20) qui sont insérées de manière interchangeable dans lesdits sièges (16), sont tournées l'une vers l'autre au niveau d'un coin central (46) au-delà de l'axe de perçage (36), en réservant un interstice central (60), sont munies d'un tranchant principal (28) s'étendant depuis un biseau de guidage (34) radialement extérieur jusqu'au coin central (46) desdites plaquettes, et sont respectivement dotées d'une surface (30) d'enlèvement de copeaux et d'une surface dépouillée (24) se rencontrant mutuellement dans la région dudit tranchant principal (28), en formant une zone cunéiforme de découpe, sachant que les tranchants principaux (28) des plaquettes de découpe alternative (20) se complètent dans la région d'une partie centrale coudée de découpe (28'), pour former un tranchant transversal interrompu par l'interstice central (60), sachant que lesdites plaquettes de découpe alternative (20) comportent, sur leur surface dépouillée (24), une rampe directrice inclinée (56) s'étendant depuis une ligne sommitale (54) partant de la région de leur partie centrale de découpe (28'), jusqu'au coin central (46) desdites plaquettes, sachant que les surfaces dépouillées (24) offrent une inclinaison positive (γ) dans la direction d'avance, dans la région radialement extérieure, avec complémentarité en forme de flèche, et une inclinaison négative (δ) dans la direction d'avance, dans la région de leurs rampes directrices (56), avec complémentarité infundibuliforme en direction de l'interstice central (60), **caractérisé par le fait que** les plaquettes de découpe alternative présentent une surface d'appui (26) tournée à l'opposé de la surface (30) d'enlèvement de copeaux et un orifice de passage (44) qui traverse ladite surface (30) d'enlèvement de copeaux et ladite surface d'appui (26), et est destiné à un organe de fixation (22) ; et **par le fait que** la ligne sommitale (54) part d'un emplacement situé à l'intérieur de la partie centrale de découpe (28') et gagne une arête (50) des plaquettes qui est située du côté de la surface d'appui.

3. Outil de perçage selon la revendication 1 ou 2, **caractérisé par le fait que** les régions (30) de la surface d'enlèvement de copeaux, qui font corps avec la partie centrale de découpe et avec la partie de découpe radialement extérieure du tranchant principal (28), décrivent un angle de tranchant transversal (α) inférieur à 70° dans la zone de transition.

4. Outil de perçage selon la revendication 3, **caractérisé par le fait que** l'angle de tranchant transversal (α) mesure de 20° à 40°.

5. Outil de perçage selon la revendication 3 ou 4, **caractérisé par le fait que** l'arête de transition est arrondie entre les deux régions (30) de la surface d'enlèvement de copeaux.

6. Outil de perçage selon l'une des revendications 1 à 5, **caractérisé par le fait que** la partie radialement extérieure de la surface dépouillée (24), et la rampe directrice centrale (56), décrivent mutuellement un angle au sommet (β) < 170° dans la région de la ligne sommitale (54).

7. Outil de perçage selon la revendication 6, **caractérisé par le fait que** l'angle au sommet (β) mesure de 120° à 160°.

8. Outil de perçage selon l'une des revendications 1, 3 à 7, **caractérisé par le fait que** la surface directrice centrale (56) possède un profil triangulaire délimité par la ligne sommitale (54), par un tronçon de la partie centrale de découpe (28') et par un tronçon de l'arête adjacente (50) des plaquettes.

9. Outil de perçage selon la revendication 8, **caractérisé par le fait que** la hauteur de la surface directrice centrale (56) à profil triangulaire, mesurée entre la ligne sommitale (54) et le coin (46) des plaquettes, représente un multiple et, de préférence, de cinq fois à vingt fois la largeur de l'interstice central (60).

10. Outil de perçage selon l'une des revendications 2 à 7, **caractérisé par le fait que** la surface directrice centrale (56) possède un profil polygonal délimité par la ligne sommitale (54), par un tronçon de la partie centrale de découpe (28') et par un tronçon de l'arête (50) des plaquettes qui est située du côté de la surface d'appui.

11. Outil de perçage selon la revendication 10, **caractérisé par le fait que** le diamètre de la surface directrice centrale (56) à profil polygonal, mesuré entre la ligne sommitale (56) et le coin central (46) des plaquettes, représente un multiple et, de préférence, de cinq fois à vingt fois la largeur de l'interstice central (60).

12. Outil de perçage selon l'une des revendications 1 à 11, **caractérisé par le fait que** la largeur de l'interstice central (60) < 0,3 mm.

13. Outil de perçage selon l'une des revendications 1 à 12, **caractérisé par le fait que** les régions des tranchants principaux (28, 28') des deux plaquettes de découpe alternative (20), se correspondant réciproquement, décrivent mutuellement un angle différant de 180°.

14. Outil de perçage selon la revendication 13, **caractérisé par le fait que** le décalage de l'angle, vis-à-vis de 180°, se situe entre 1° et 4°.

15. Outil de perçage selon l'une des revendications 1 à 14, **caractérisé par le fait que** les deux plaquettes de découpe (20) sont décalées axialement l'une de l'autre.

16. Outil de perçage selon la revendication 15, **caractérisé par le fait que** le décalage axial mesure de l'ordre de 1/100 mm, de préférence de 0,005 mm à 0,05 mm.

17. Outil de perçage selon l'une des revendications 1 à 16, **caractérisé par le fait que** le corps de base (14) possède dans la région de l'interstice central (60), entre les sièges (16) dédiés aux plaquettes, un profil concave (72) axialement en retrait vis-à-vis desdits sièges dédiés auxdites plaquettes.

18. Outil de perçage selon l'une des revendications 1 à 17, **caractérisé par le fait que** le siège (16) dédié à une plaquette, et ladite plaquette de découpe alternative (20), présentent des dentures à engrènement mutuel complémentaire en vue d'instaurer un assemblage radial par concordance de formes.

19. Outil de perçage selon l'une des revendications 1 à 18, **caractérisé par le fait que** les plaquettes de découpe alternative (20) portent, par leur surface d'appui (26) et par leurs surfaces de contact (48, 64) tournées à l'opposé de la surface (30) d'enlèvement de copeaux, contre des surfaces du siège munies d'une forme complémentaire ; **par le fait que** lesdites surfaces de contact (48, 64) fusionnent dans ladite surface d'appui (26) par l'intermédiaire d'un biseau respectif d'appui (68, 70) réservant, avec les surfaces adjacentes dudit siège (16), un espace libre (80) du type canal ; et **par le fait qu'**un canal de refroidissement (84, 86), situé dans le corps de base (14) et pouvant être sollicité par un agent de lubrification et de refroidissement, débouche dans chaque siège dédié à une plaquette, dans la région dudit espace libre (80) du type canal.

20. Outil de perçage selon la revendication 19, **caractérisé par le fait que** l'espace libre (80) du type canal est ouvert en direction de l'interstice central (60).

21. Outil de perçage selon l'une des revendications 19 ou 20, **caractérisé par le fait que** l'espace libre (80) du type canal est ouvert en direction du biseau de guidage (34) radialement extérieur.

22. Outil de perçage selon l'une des revendications 19 à 21, **caractérisé par le fait que** les surfaces de contact (48, 64) de la plaquette de découpe alternative qui sont tournées à l'opposé de la surface (30) d'enlèvement de copeaux, et les biseaux d'appui (68, 70) desdites surfaces, fusionnent mutuellement par l'intermédiaire d'un coin arrondi (66, 69) de ladite plaquette.

23. Outil de perçage selon la revendication 22, **caractérisé par le fait que** le canal de refroidissement (84, 86) débouche dans le siège (16) dédié à une plaquette, à proximité du coin arrondi (66) de ladite plaquette, par l'intermédiaire d'un orifice d'embouchure (82).

24. Outil de perçage selon l'une des revendications 1 à 23, **caractérisé par le fait que** les plaquettes de découpe alternative (20) présentent, dans la région de leurs surfaces (30) d'enlèvement de copeaux, une cuvette profilée (90) d'enlèvement de copeaux qui est au moins attenante à une partie du tranchant principal (28, 28').

25. Outil de perçage selon la revendication 24, **caractérisé par le fait que** la cuvette profilée (90) d'enlèvement de copeaux s'engage, au moins partiellement, dans la région de la partie centrale de découpe (28').

26. Outil de perçage selon la revendication 24 ou 25, **caractérisé par le fait que** la cuvette profilée (90) d'enlèvement de copeaux s'étend jusque dans la région de la surface (30) d'enlèvement de copeaux qui est attenante à la rampe directrice.

27. Outil de perçage selon la revendication 26, **caractérisé par le fait que** la cuvette profilée (90) d'enlèvement de copeaux s'étend jusqu'à proximité du coin central des plaquettes.

28. Outil de perçage selon l'une des revendications 24 à 27, **caractérisé par le fait que** la cuvette profilée (90) d'enlèvement de copeaux s'étend jusqu'au tranchant auxiliaire extérieur (32).

29. Outil de perçage selon la revendication 28, **caractérisé par le fait que** la cuvette profilée (90) d'enlèvement de copeaux traverse le tranchant auxiliaire extérieur (32).

30. Outil de perçage selon l'une des revendications 24 à 29, **caractérisé par le fait que** le tranchant principal (28), et la cuvette profilée (90) d'enlèvement de copeaux, sont séparés l'un de l'autre par un chanfrein (92) s'étendant, pour l'essentiel, parallèlement audit tranchant principal (28).

31. Outil de perçage selon l'une des revendications 24 à 30, **caractérisé par le fait que** la cuvette profilée (90) d'enlèvement de copeaux offre une surface de fond concave.

32. Outil de perçage selon l'une des revendications 24 à 31, **caractérisé par le fait que** la cuvette profilée (90) d'enlèvement de copeaux offre une surface de fond concave, partiellement cylindrique.

33. Outil de perçage selon l'une des revendications 1 à 32, **caractérisé par le fait que** le tranchant principal (28) est interrompu par des encoches (96', 96") brise-copeaux, disposées à distance les unes des autres.

34. Outil de perçage selon la revendication 33, **caractérisé par le fait que** les encoches (96', 96") brise-copeaux se trouvent en dehors de la partie centrale de découpe (28').

35. Outil de perçage selon la revendication 33, **caractérisé par le fait que** des encoches brise-copeaux sont disposées également dans la région de la partie centrale de découpe (28').

36. Outil de perçage selon l'une des revendications 1 à 35, **caractérisé par le fait que** le tracé du tranchant auxiliaire (32) est orienté parallèlement à l'axe de perçage ou selon un angle divergeant, jusqu'à 3°, vis-à-vis dudit axe de perçage.

37. Plaquette de découpe alternative pour outils de perçage à deux tranchants, comprenant un tranchant principal (28) s'étendant d'un coin extérieur (32) à un coin intérieur (46) de ladite plaquette ; une surface (30) d'enlèvement de copeaux et une surface dépouillée (24) qui se rattachent respectivement audit tranchant, en formant une zone cunéiforme de découpe ; une surface d'appui (26) située du côté de ladite plaquette qui est tourné à l'opposé de ladite surface dépouillée (24) ; et un orifice de passage (44) traversant ladite surface dépouillée (24) et ladite surface d'appui (26), et destiné à un organe de fixation (22), sachant que ladite surface dépouillée (24) comporte une rampe directrice (56) inclinée en direction de la surface d'appui (26) et s'étendant jusqu'au coin intérieur (46) de la plaquette, depuis une ligne sommitale (54) située dans la région comprise entre l'orifice de passage (44) et ledit coin intérieur (46) de la plaquette, et partant d'une partie centrale coudée de découpe (28') dudit tranchant principal (28), **caractérisée par le fait que** ladite ligne sommitale (54) part d'un emplacement situé à l'intérieur de ladite partie centrale de découpe (28') et gagne une arête (50) de la plaquette, tournée à l'opposé, ladite partie centrale de découpe (28') et ladite arête (50) située à l'opposé se rencontrant dans ledit coin intérieur (46) de la plaquette.

38. Plaquette de découpe alternative selon la revendication 37, **caractérisée par le fait que** la rampe directrice (56) et la partie de la surface dépouillée (24) qui renferme l'orifice de passage (44) décrivent mutuellement, dans la région de la ligne sommitale (54), un angle au sommet (β) inférieur à 170° et compris, de préférence, entre 120° et 160°.

39. Plaquette de découpe alternative selon la revendication 38, **caractérisée par le fait que** la rampe directrice (56) possède un profil triangulaire délimité par la ligne sommitale (54), par un tronçon de la partie centrale de découpe (28') et par un tronçon de l'arête adjacente (50) de ladite plaquette.

40. Plaquette de découpe alternative selon l'une des revendications 37 à 39, **caractérisée par le fait qu'**un évidement (58) se trouve dans la région du coin central (46) de ladite plaquette, du côté de la surface d'appui (26).

41. Plaquette de découpe alternative selon l'une des revendications 37 à 40, **caractérisée par le fait que** la rampe directrice (56) et la partie extérieure de la surface dépouillée (24) qui renferme l'orifice de passage (44) décrivent mutuellement, dans la région de la ligne sommitale (54), un angle au sommet (β) inférieur à 170°.

42. Plaquette de découpe alternative selon la revendication 41, **caractérisée par le fait que** l'angle au sommet (β) mesure de 120° à 160°.

43. Plaquette de découpe alternative selon l'une des revendications 37 à 42, **caractérisée par le fait que** la surface d'appui (26) fusionne, par l'intermédiaire de biseaux respectifs d'appui (68, 70), dans les surfaces voisines de contact (48, 64) tournées à l'opposé de la surface (30) d'enlèvement de copeaux.

44. Plaquette de découpe alternative selon la revendication 43, **caractérisée par le fait que** les surfaces de contact (48, 64) tournées à l'opposé de la surface (30) d'enlèvement de copeaux, et les biseaux d'appui (68, 70) desdites surfaces, fusionnent mutuellement par l'intermédiaire d'un coin arrondi (66, 69) de ladite plaquette.

45. Plaquette de découpe alternative pour outils de perçage à deux tranchants, comprenant un tranchant principal (28) s'étendant d'un coin extérieur (32) à un coin intérieur (46) de ladite plaquette ; une surface (30) d'enlèvement de copeaux et une surface dépouillée (24) qui se rattachent respectivement audit tranchant, en formant une zone cunéiforme de découpe, sachant que ladite surface dépouillée (24) présente une rampe directrice (56) inclinée vis-à-vis de la partie extérieure de ladite surface dépouillée, s'étendant jusqu'au coin intérieur (46) de ladite plaquette et partant d'une ligne sommitale (54) s'étendant depuis une partie centrale coudée de découpe (28') dudit tranchant principal (28), **caractérisée par le fait que** ladite plaquette de découpe alternative présente une surface d'appui (26) tournée à l'opposé de la surface (30) d'enlèvement de copeaux et un orifice de passage (44) qui traverse ladite surface (30) d'enlèvement de copeaux et ladite surface d'appui (26), et est destiné à un organe de fixation ; et **par le fait que** la ligne sommitale (54) part d'un emplacement situé à l'intérieur de ladite partie centrale de découpe (28'), et gagne une arête (50) de ladite plaquette qui est située du côté de ladite surface d'appui.

46. Plaquette de découpe alternative selon la revendication 45, **caractérisée par le fait que** la rampe directrice (56), et la partie extérieure de la surface dépouillée (24) qui est limitrophe de ladite rampe dans la région de la ligne sommitale (54), décrivent mutuellement un angle au sommet (β) inférieur à 170° et compris, de préférence, entre 120° et 160°.

47. Plaquette de découpe alternative selon la revendication 46, **caractérisée par le fait que** l'angle au sommet (β) mesure de 120° à 160°.

48. Plaquette de découpe alternative selon les revendications 45 à 47, **caractérisée par le fait que** la rampe directrice (56) possède un profil polygonal délimité par la ligne sommitale (54), par un tronçon de la partie centrale de découpe (28'), et par un tronçon de l'arête (50) de ladite plaquette qui est située du côté de la surface d'appui.

49. Plaquette de découpe alternative selon l'une des revendications 37 à 48, **caractérisée par** une cuvette profilée (90) d'enlèvement de copeaux qui est située dans la région de la surface (30) d'enlèvement de copeaux et jouxte au moins une partie du tranchant principal (28, 28').

50. Plaquette de découpe alternative selon la revendication 49, **caractérisée par le fait que** la cuvette profilée (90) d'enlèvement de copeaux s'engage, au moins partiellement, dans la région de la partie centrale de découpe (28').

51. Plaquette de découpe alternative selon la revendication 49 ou 50, **caractérisée par le fait que** la cuvette profilée (90) d'enlèvement de copeaux s'étend jusque dans la région de la surface (30) d'enlèvement de copeaux qui est attenante à la rampe directrice.

52. Plaquette de découpe alternative selon la revendication 51, **caractérisée par le fait que** la cuvette profilée (90) d'enlèvement de copeaux s'étend jusqu'à proximité du coin central de ladite plaquette.

53. Plaquette de découpe alternative selon l'une des revendications 49 à 52, **caractérisée par le fait que** la cuvette profilée (90) d'enlèvement de copeaux s'étend jusqu'au tranchant auxiliaire extérieur (32).

54. Plaquette de découpe alternative selon la revendication 53, **caractérisée par le fait que** la cuvette profilée (90) d'enlèvement de copeaux traverse le tranchant auxiliaire extérieur (32).

55. Plaquette de découpe alternative selon l'une des revendications 49 à 54, **caractérisée par le fait que** le tranchant principal (28), et la cuvette profilée (90) d'enlèvement de copeaux, sont séparés l'un de l'autre par un chanfrein (92) s'étendant, pour l'essentiel, parallèlement audit tranchant principal (28).

56. Plaquette de découpe alternative selon l'une des revendications 49 à 55, **caractérisée par le fait que** la cuvette profilée (90) d'enlèvement de copeaux offre une surface de fond concave.

57. Plaquette de découpe alternative selon l'une des revendications 49 à 56, **caractérisée par le fait que** la cuvette profilée (90) d'enlèvement de copeaux offre une surface de fond concave, partiellement cylindrique.

58. Plaquette de découpe alternative selon l'une des revendications 37 à 57, **caractérisée par le fait que** le tranchant principal (28) est interrompu par des encoches (96', 96") brise-copeaux, disposées à distance les unes des autres.

59. Plaquette de découpe alternative selon la revendication 58, **caractérisée par le fait que** les encoches (96', 96") brise-copeaux se trouvent en dehors de la partie centrale de découpe (28').

60. Plaquette de découpe alternative selon la revendication 58, **caractérisée par le fait que** des encoches brise-copeaux sont disposées également dans la région de la partie centrale de découpe (28').
